(19) Europäisches Patentamt
European Patent Office
Office européen des brevets

(11) Numéro de publication: **0 482 985 B1**

(12) # FASCICULE DE BREVET EUROPEEN

(45) Date de publication de fascicule du brevet: **31.08.94**

(51) Int. Cl.[5]: **C08F 220/36**, C08F 220/58, G02F 1/35, C07C 245/06, C07D 303/16

(21) Numéro de dépôt: **91402783.4**

(22) Date de dépôt: **18.10.91**

(54) **Polymère réticulable pour applications en optique non linéaire.**

(30) Priorité: **22.10.90 FR 9013041**

(43) Date de publication de la demande:
**29.04.92 Bulletin 92/18**

(45) Mention de la délivrance du brevet:
**31.08.94 Bulletin 94/35**

(84) Etats contractants désignés:
**CH DE GB IT LI**

(56) Documents cités:
**EP-A- 0 230 898** **EP-A- 0 244 288**
**EP-A- 0 316 662** **EP-A- 0 372 433**
**WO-A-90/00585** **FR-A- 2 630 744**

**Chem.Mater.1992,vol.4, 963-965, Yi Jin et al., "Poled, Chromophore-Functionalized Polymeric Nonlinear Optical Materials".**

(73) Titulaire: **THOMSON-CSF**
**173, Boulevard Haussmann**
**F-75008 Paris (FR)**

(72) Inventeur: **Muller, Sophie**
**THOMSON-CSF,**
**SCPI,**
**Cédex 67**
**F-92045 Paris la Défense (FR)**
Inventeur: **Le Barny, Pierre**
**THOMSON-CSF,**
**SCPI,**
**Cédex 67**
**F-92045 Paris la Défense (FR)**
Inventeur: **Broussoux, Dominique**
**THOMSON-CSF,**
**SCPI,**
**Cédex 67**
**F-92045 Paris la Défense (FR)**

(74) Mandataire: **Guérin, Michel et al**
**THOMSON-CSF**
**SCPI**
**B.P. 329**
**50, rue Jean-Pierre Timbaud**
**F-92402 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**EP 0 482 985 B1**

Rank Xerox (UK) Business Services
(3.10/3.09/3.3.3)

## Description

La présente invention concerne des matériaux polymères util isables en optique non linéaire. Plus précisément, elle concerne un nouveau type de polymères amorphes possédant dans leurs chaînes latérales un groupement (chromophore) qui pour donner un matériau actif en optique non linéaire, doit avoir été orienté au préalable sous champ électrique à une température voisine de la température de transition vitreuse, les performances de ces polymères étant particulièrement stables dans le temps. Il apparaît trés intéressant d'utiliser de tels polymères dans la réalisation de composants pour l'optique intégrée tels qu'un doubleur de fréquence opérant à des longueurs d'onde comprises entre 0,8 et 2µm, un modulateur électrooptique utilisant une onde électromagnétique de longueur d'onde comprise entre 0,6 et 2µm. En effet, les matériaux organiques ont montré qu'ils permettaient d'obtenir des performances en optique non linéaire aussi satisfaisantes que les matériaux inorganiques type niobate de lithium ou dihydrogenophosphate de potassium ou arséniure de gallium, et plus précisément les polymères qui offrent de grands avantages de mise en oeuvre, de coût et de variété de structure grâce à l'ingénierie moléculaire apparaissent très intéressants. Jusqu'à présent les matériaux polymères proposés en vue de réaliser des films pour l'optique non linéaire ont été :

- Des solutions solides de petites molécules actives en optique non linéaire (dite colorant) dissoute dans un polymère amorphe ou dans un polymère cristal liquide.
- Des copolymères dans lesquels la molécule active est greffée au squelette de polymère de façon à s'affranchir de problèmes de solubilité et ainsi à augmenter la teneur en entité génératrice d'effets optiques non linéaires. Dans ce type de matériau la molécule colorant attachée au polymère ne peut plus diffuser au sein du matériau mais peut être le siège de relaxations après orientation, qui contribuent au vieillissement des performances du matériau.

Pour pallier ces problèmes de relaxation, différentes équipes de recherche ont synthétisé des copolymères présentant d'une part une chaîne latérale réticulable, d'autre part, une chaîne portant une entité génératrice d'effets optiques non linéaires (P. Le Barny FR 88 05790, N° de publication 2 630 744) (Joonwon Parkand Tobin, J. Marks, Jian Yang and George K. Wong Chem-Maten, 2, 229-231 (1990)). Dans ce les chaînes principales de polymères ne peuvent plus fluer les unes par rapport aux autres grâce à la réticulation, mais les chaînes latérales porteuses de molécules colorantes conservent suffisamment de degrés de liberté pour relaxer et perdre partiellement au cours du temps l'orientation qui leur avait été induite.

Parallèlement, une autre solution a été envisagée, il s'agit d'élaborer des polymères actifs à partir de petites molécules polyfonctionnelles actives en optique non linéaire et réticulables par voie thermique (M. Eich et Coll (IBM), J. Appl. Phys., 66 (7) (1989)) (D. Jungbauer, B. Reck, R. Twieg, D. Y. Yoon, C.G. Willson and J.D. Swalen, Appl. Phys. Letter. 56 (26) (1990)). L'avantage principal de tels systèmes réside dans la grande stabilité obtenue puisque les chromophores constituent directement les points d'ancrage du réseau. Cependant, l'obtention du polymère reste incertaine, la réalisation de films orientés à partir des solutions liquides constituées de petites molécules à très faible viscosité nécessite à ce jour la mise au point d'un protocôle de dépôt et de cycles de cuisson particulièrement délicats. De plus, les molécules les mieux adaptées à ce type d'obtention de polymères n'apparaissent pas comme les plus intéressantes en optique non linéaire.

C'est pourquoi, la présente invention propose de nouveaux matériaux polymères à chaînes latérales dans lesquels l'entité génératrice d'effets optiques non linéaires est également réticulable par voie thermique ou photochimique. Ainsi dans le polymère réticulé, la relaxation des chaines porteuses de groupements actifs se trouve contrainte, conduisant le matériau à rester dans l'état d'orientation qui lui a été imposé. Les points d'ancrage se trouvent directement au niveau des chromophores assurant ainsi une grande stabilité dans le temps et la réalisation de films orientés à partir de tels polymères ne se heurte pas à des problèmes spécifiques.

Plus précisément, le polymère est constitué d'un squelette de type polyacrylique ou de type polystyrène ou de type polysiloxane sur lequel sont rattachées des chaînes latérales assurant des fonctions différentes ; une première chaîne pouvant être réticulable thermiquement ou photochimiquement contribue à donner un caractère amorphe au matériau et une deuxième chaîne est capable de générer des effets optiques non linéaires comprenant en outre une fonction terminale réticulable.

Les polymères selon l'invention possèdent les propriétés suivantes :

- une température de transition vitreuse supérieure à 100 °C conférée par le squelette, dans le cas des dérivés du polystyrène et des polyacryliques.
- des performances en susceptibilité du second ordre (caractéristique des effets optiques non linéaires du second ordre) suffisantes (soit plusieurs pm/V) pour envisager des applications pratiques,

- une stabilité dans le temps des performances évoquées ci-dessus,
- des polymères filmogènes et de très bonne qualité optique assurant une bonne transparence aux longueurs d'onde d'utilisation,
- une réticulation facile à réaliser thermiquement ou photochimiquement et ce en une étape commune à la polarisation sous champ électrique.

Les polymères de type polyacrylique sont de préférence obtenus en copolymérisant un monomère méthacrylique éventuellement porteur d'une fonction réticulable par voie thermique ou photochimique, et un monomère porteur d'une entité active en optique non linéaire présentant à une extrémité une fonction polymérisable méthacrylate, acrylate ou chloroacrylate et à l'autre extrémité, une fonction réticulable par voie thermique ou photochimique.

Les polymères de type polystyrène sont de préférence obtenus par greffage d'entité active sur une chaîne polyparahydroxystyrène déjà existante.

Les polymères de type polysiloxane sont de préférence obtenus par greffage d'une entité active, sur une chaîne polysiloxane déjà existante par réaction d'hydrosilylation.

La structure générale des polyacryliques, selon l'invention est la suivante:

I) Le groupement réticulable R ne fait pas partie de l'entité génératrice des effets optiques non linéaires

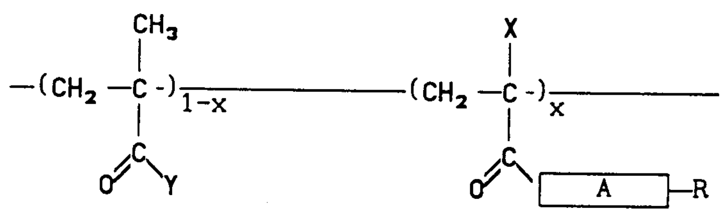

où x fraction molaire

X = $H, CH_3, Cl$

Y = $-O-C_nH_{2n+1}$ et $1 \leqq n \leqq 15$ , $-O-(CH_2)_m-R$ avec $1 \leqq m \leqq 10$

où R : groupement réticulable chimiquement

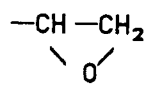

ou R : groupement photoréticulable

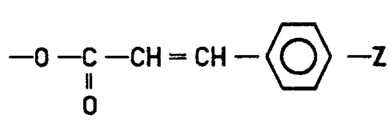

et Z = $H, -O-C_wH_{2w+1}$ avec $1 \leqq w \leqq 10$

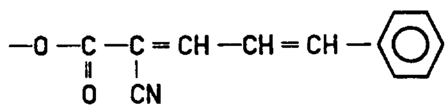

A entité génératrice des effets optiques du second ordre comprend un groupe donneur d'électrons, un ou deux groupes accepteurs d'électrons et un système à électrons $\pi$ conjugués;l' entité A pouvant être :

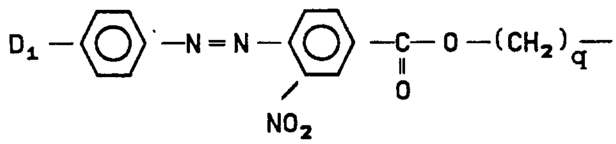

avec 1≤q≤10
avec $D_1$ :

$-O-$, 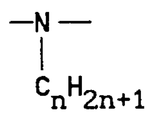 , 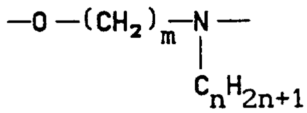

et 0≤n≤3 , 2≤m≤15
ou

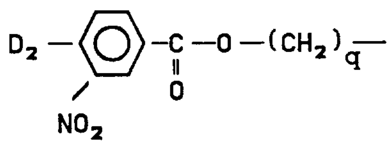

avec 1≤q≤10
avec $D_2$ :

$-O-$, 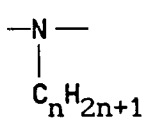 , 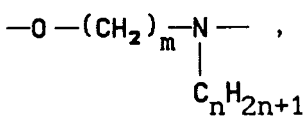 , $-O-(CH_2)_m-O-$

et 0≤n≤3 , 2≤m≤15
ou

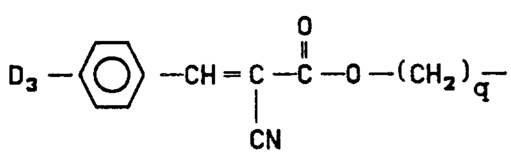

avec 1≤q≤10
avec $D_3$ :

$-O-$, 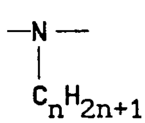 , 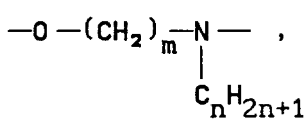 , $-O-(CH_2)_m-O-$ ,

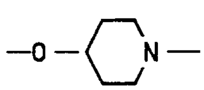

et 0≤n≤3 , 2≤m≤15

II) Le groupement R fait partie intégrante de l'entité A :

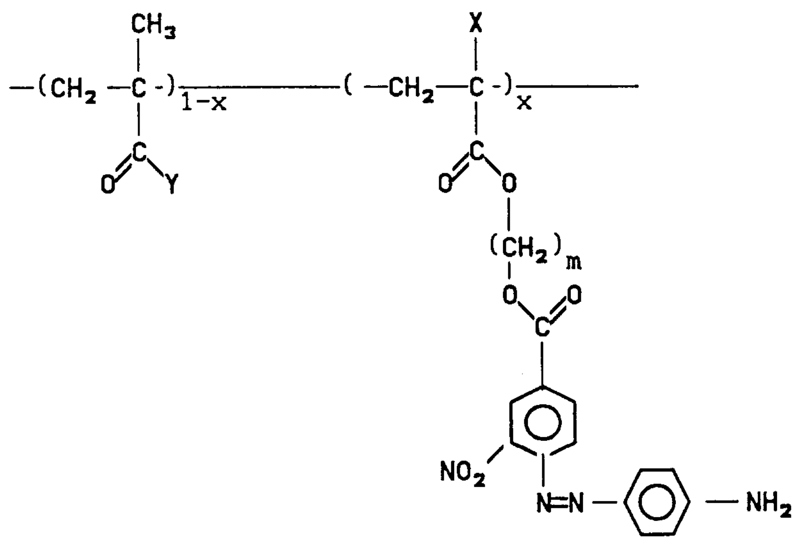

où x fraction molaire

X = H,$CH_3$,Cl

Y = -O—$C_nH_{2n+1}$ et 1≦n≦10 , —$NH_2$ , —O—$(CH_2)_q$—$NH_2$ et 2≦q≦15 2≦m≦15

La formule générale des polysiloxanes ,selon l'invention est la suivante :

I) Le groupement R ne fait pas partie de l'entité génératrice des effets optiques non linéaires

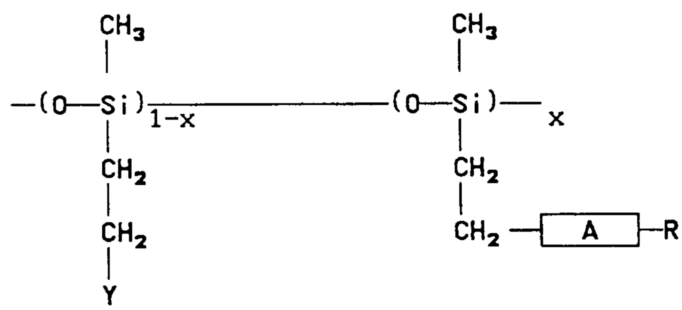

où : Y est —$C_nH_{2n+1}$ avec 2≦n≦13

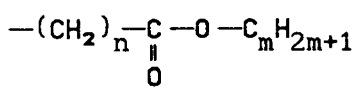

avec 1≦n≦13 et 1≦m≦15

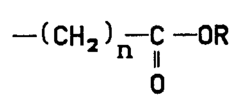

avec 1≦n≦13

où R : groupement réticulable chimiquement

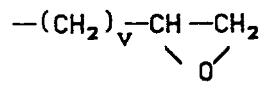

avec 1≦v≦15

ou R : groupement photoréticulable

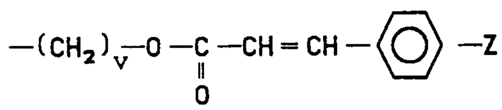

avec 2≦v≦15

et Z = H, -O—$C_wH_{2w+1}$ avec 0≦w≦3

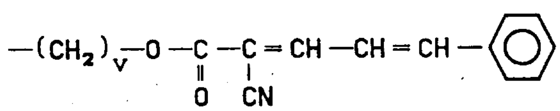

avec 2≦v≦15

A entité génératrice des effets optiques du second ordre :

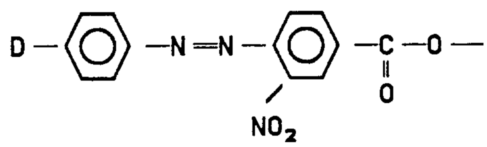 , 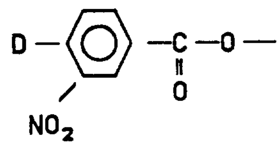 ,

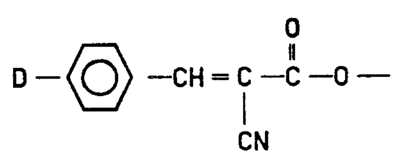

avec D :

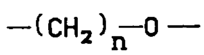 , 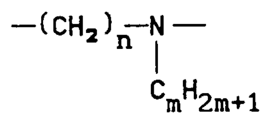

et 1≦n≦10, 0≦m≦13

II) Le groupement R fait partie intégrante de l'entité A :

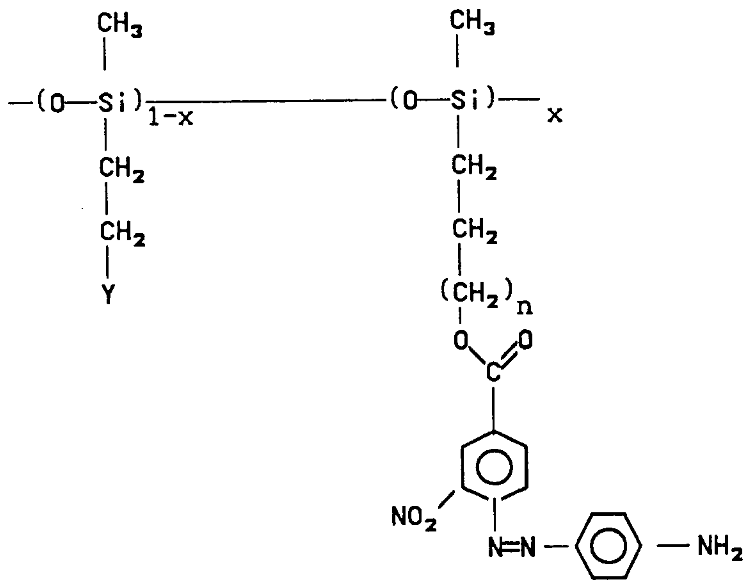

avec $1 \leqq n \leqq 13$
où Y : $—C_mH_{2m+1}$ , $-(CH_2)_m—NH_2$ et $1 \leqq m \leqq 13$

La structure générale des polystyrènes,selon l'invention est la suivante :

I) Le groupement R ne fait pas partie de l'entité génératrice des effets optiques non linéaires

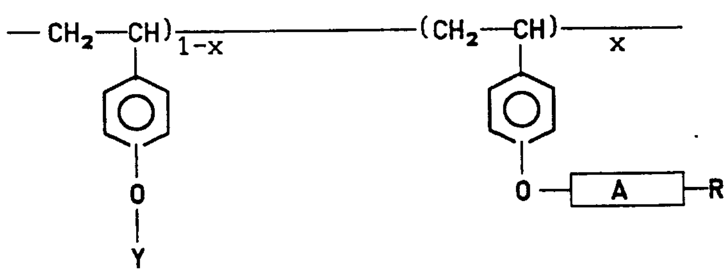

où : Y est $—C_n^- H_{2n+1}$ avec $0 \leqq n \leqq 10$ , R
R :

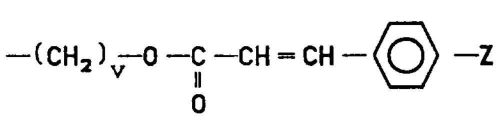

avec $2 \leqq v \leqq 15$
et Z =H, $-O—C_wH_{2w+1}$ avec $0 \leqq w \leqq 3$

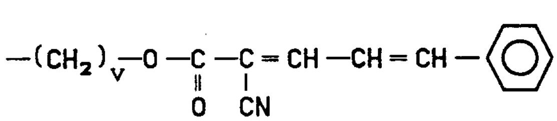

avec $2 \leqq v \leqq 15$
A entité génératrice des effets optiques du second ordre :

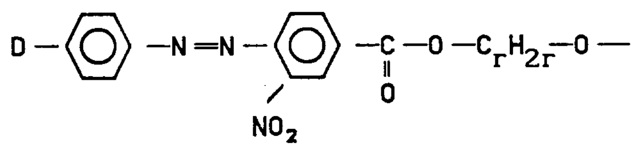

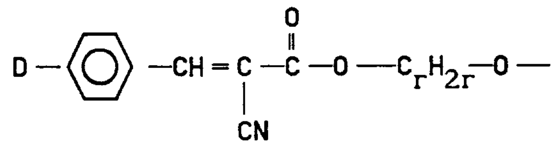
,
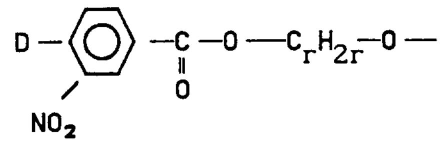

avec $2 \leqq r \leqq 15$

avec D :

$-(CH_2)_v-O-$ ,
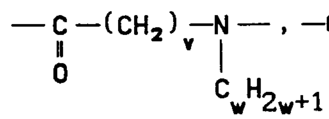
,
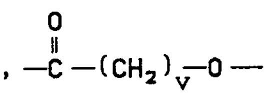

et $1 \leqq v \leqq 15$, $0 \leqq w \leqq 3$

II) Le groupement R fait partie intégrante de l'entité A :

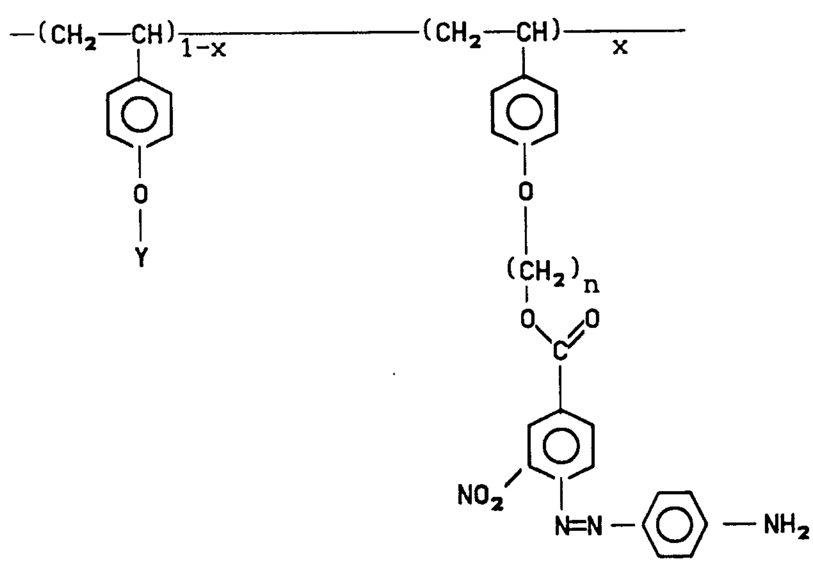

avec $1 \leqq n \leqq 15$

où Y : $-C_mH_{2m+1}$ ,

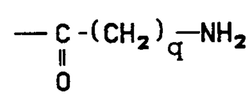

avec $0 \leqq m \leqq 10$

et $1 \leqq q \leqq 10$

L'invention sera mieux comprise et d'autres avantages apparaitront à la lecture de la description qui va suivre, donnée à titre non limitatif et grâce aux figures annexées parmi lesquelles :

- La figure I représente la structure moléculaire d'un premier exemple de polymère selon l'invention, de type polyacrylique.
- La figure II représente un schéma réactionnel de synthèse du monomère colorant du premier exemple de polymère selon l' invention, de type polyacrylique.
- La figure III représente la structure moléculaire d'un second exemple de polymère selon l'invention, de type polyacrylique
- La figure IV représente un schéma réactionnel de synthèse du monomère colorant du deuxième exemple de polymère selon l' invention, de type polyacrylique.
- La figure V représente la structure moléculaire d'un troisième exemple de polymère selon l'invention, de type polyacrylique
- La figure VI représente un schéma réactionnel de synthèse d'un monomère colorant du troisième exemple de polymère selon l' invention, de type polyacrylique.
- La figure VII représente un exemple de petite molécule polyfonctionnelle, la tri (amino 3 trimethylène) amine, servant d'agent de réticulation par voie thermique dans les copolymères époxydés,
- La figure VIII représente des spectres infra-rouges réalisés à partir de mélanges : polymère (structure chimique de la figure I) et agent de réticulation (structure chimique de la figure VII) pour des durées variables de réticulation.

De préférence, les copolymères selon l'invention, de type polyacrylique sont obtenus par polymérisation radicalaire, utilisant l'$\alpha$ $\alpha$'azobisisobutyronitrile (AIBN) comme amorceur et la dimethylformamide (DMF) comme solvant.

La teneur en colorant est déterminée par résonance magnétique nucléaire et analyse élémentaire.

Plusieurs exemples de synthèse de polymères selon l'invention, de type polyacrilique sont donnés ci-dessous, ainsi que des performances obtenues avec des matériaux polymères selon l'invention.

## EXEMPLE I

Cet exemple concerne la synthèse d'un polymère de type acrylique . Plus précisément, il s'agit d'un copolymère de [méthacrylate de méthyle, 3-nitro 4- (4' - (N-methyl N - méthacryloxyéthylamino) Benzene Azo) (Carbonyloxyglycidyl)], dont la structure est représentée à la figure I. Cette synthèse se déroule en 4 étapes à partir de l'anilinoéthanol selon le schéma réactionnel illustré à la figure II.

### Synthèse du N-méthyl Anilino Ethanol

Dans un récipient de 250ml sont introduits 50g (0,365 mole) de 2 N Anilinoéthanol, 52,5g (0,37 mole) d'Iodure de méthyle et 66ml d'éthanol. La solution est laissée une nuit au reflux de l'éthanol.

Après évaporation de l'éthanol à l'évaporateur sous vide, un résidu jaune cristallisé est obtenu. Celui-ci est solubilisé dans 200ml d'une solution de potasse à 50 %. Le produit est extrait avec 3 x 200ml d'éther dans une ampoule à décanter. La solution éthérée est séchée sur sulfate de sodium, filtrée puis évaporée à l'évaporateur sous vide. Une huile jaune pâle est obtenue. Le produit est purifié par distillation sous vide (Point d'ébullition $E_1$ = 121 °C ; Rendement de la réaction 75 %).

### Synthèse du N-méthacryloxy 2 éthyl, N-méthyl Aniline

Dans un récipient d'un litre sont mis en solution dans 200ml d'éther : 30g de Nméthyl Anilinoéthanol (0,2 mole), 3,6g de 2,6-Ditertiobutylphénol et 26,13g de triéthylamine (0,26 mole). A cette solution portée à 5 °C est ajoutée goutte à goutte une solution de 21g de chlorure de méthacryloyle (0,2 mole) dans 200ml d'éther. La réaction est poursuivie toute la nuit. Un deuxième équivalent de triéthylamine et de chlorure de méthacryloyle est ajouté. Le chlorhydrate de triéthylamine est séparé par filtration et lavé à l'éther. Le filtrat obtenu est lavé avec une solution diluée d'Acide Chlorhydrique (pH = 4) puis à l'eau distillée jusqu'à pH neutre. La phase éthérée est séchée sur Sulfate de Magnésium, filtrée et évaporée. Une huile jaune est obtenue. Le produit est purifié par distillation en présence d'hydroquinone (point d'ébullition $E_2$ = 119,5 °C ; rendement de réaction 47%).

NB : L'hydroquinone qui distille partiellement avec le produit est éliminée par précipitation dans l'hexane puis filtration.

Synthèse de l'acide 3-Nitro 4- (4'(N-méthyl N-méthacryloxy éthyl Amino) Benzène Azo) Benzoïque.

1. Préparation du sel de diazonium :

12,48g (0,0685 mole) d'acide 4 Amino 3 nitro benzoïque sont solubilisés (partiellement) dans 230ml d'une solution de soude 0,3N portée à 60°C sous agitation. Une solution de 31ml d'acide chlorhydrique 37% est ajoutée goutte à goutte via une ampoule à brome. La suspension est alors portée à 5°C et une solution de 4,72g (0,065 mole) de Nitrite de Sodium dans 35ml d'eau lui est ajoutée goutte à goutte.

Le mélange est laissé sous agitation 3HOO, puis la suspension est filtrée sur verre fritté. Le résidu solide est rincé avec un minimum d'eau.

2. Synthèse du dérivé diazoïque :

La solution précédemment obtenue est additionnée goutte à goutte à une solution de 15g de N Méthacryloyloxy 2 éthyl N méthyl aniline (0,0685 mole) dans 40ml d'éthanol. Il se forme immédiatement un précipité rouge sombre. Celui-ci est filtré sur verre fritté, lavé à l'eau puis à l'hexane, et mis à sécher une nuit au dessicateur. Rendement en produit brut = 77%.

Synthèse du 3 Nitro 4- (4'- (N méthyl N-méthacryloyloxy éthyl Amino) Benzène azo) Carbonyloxy glycidyl

10g du produit brut précédemment obtenu sont dissous dans 70ml d'héxaméthylphosphortriamide (HMPA) à 60°C dans un récipient de 250ml muni d'un agitateur magnétique . 5 , 17g de 1,8-diazobicyclo-[5,4,0]-undec-7-ène(DBU), puis 4,66g d'épibromhydrine solubilisée dans 20ml d'HMPA, sont ajoutés goutte à goutte à la solution précédente via une ampoule à brome. La température est ramenée à environ 45°C et la réaction est poursuivie pendant 3HOO.

Afin d'éliminer HMPA, la solution est versée goutte à goutte dans un grand volume d'eau maintenu sous forte agitation. Un solide visqueux rouge précipite. Il est laissé à décanter toute la nuit. Le lendemain, la phase surnageante est éliminée et le résidu repris au chloroforme. La phase organique ainsi obtenue est séchée sur Sulfate de Sodium, filtrée et évaporée sous vide.

Le produit est ensuite séparé par chromatographie sur colonne de silice avec le toluène comme éluant, recristallisé dans un mélange cyclohexane/dichlorométhane (80/20) puis séché au dessicateur (masse obtenue = 3,3g, soit un rendement de 50% calculé par rapport à l'acide précurseur contenu à 60% molaire (≃ 60% massique) dans le produit brut utilisé).

Le point de fusion du produit obtenu est égal à 94,6°C. Le copolymère correspondant est alors obtenu par polymérisation radicalaire. Il est précipité dans l'éther et séché sous vide.

Un spectre UV réalisé dans le chloroforme comme solvant montre un maximum d'absorption pour une longueur d'onde $\lambda$ = 471 nm.

Lorsque x = 0,4, le copolymère possède une température de transition vitreuse de 117°C.

Synthèse du copolymère selon l'invention

Un mélange équimolaire de méthacrylate de méthyle et de 3 Nitro 4-(4'-(N méthyl N-méthacryloyloxy éthyl Amino)benzene azo)carbonyloxy glycidyle polymérisé en présence d'AIBN (0,5 %molaire par rapport aux monomères) pendant 24 heures à 60°C a conduit à un copolymère ayant une teneur en colorant de 50 % et une température de transition vitreuse de 117°C

EXEMPLE II

Cet exemple concerne la synthèse d'un polymère de type polyacrylique. Il s'agit d'un copolymère de [méthacrylate de méthyle, 3- nitro 4- (4'-Nméthyl N-métacryloyloxyéthyl Amino) Benzène Azo) 1 carbonyloxy 3 - Cinnamoyloxypropyl], dont la structure moléculaire est indiquée figure III.

La synthèse du 3-Nitro 4- (4'-Nméthyl N-métacryloyloxy éthyl Amino) Benzène Azo) 1-carbonyloxy 3-cinnamoyloxy propyle est une synthèse convergente se faisant en 6 étapes selon le schéma réactionnel représenté à la figure IV. Les trois premières étapes I, II et III conduisent à partir du 2 Anilinoéthanol, à l'acide 3-Nitro 4- (4'- Nméthyl Nméthacryloyloxyéthyl Amino) Benzène Azo) benzoïque selon le même protocole expérimental que celui décrit dans l'exemple I, et deux étapes IV et V conduisent à partir de l'acide cinnamique, au cinnamate de 3 bromo propanol.

Synthèse de chlorure de l'acide cinnamique

Dans un récipient de 260ml muni d'une agitation magnétique, on introduit 14,8g (0,1 mole) d'acide cinnamique, 90ml de chlorure d'oxalyle puis quelques gouttes de DMF. Un violent dégagement gazeux a lieu. On laisse la réaction se poursuivre pendant 1 heure. On évapore alors l'excès de chlorure d'oxalyle. On obtient un produit brut solide utilisé dans l'étape suivante sans autre purification.

Synthèse du cinnamate de 3 Bromopropyle

Dans un récipient de 500ml, muni d'une agitation magnétique, on dissout 0,1 mole de chlorure de cinnamoyle dans 200ml de THF, on additionne 14g (0,1 mole) de 3 bromopropanol puis on ajoute goutte à goutte 11g (0,109 mole) de triéthylamine. On agite à température ambiante pendant 16 heures.

On élimine le chlorhydrate de triéthylamine par filtration. Le filtrat est évaporé à sec.

Le produit brut est dissous dans l'éther. Il existe un insoluble (anhydride d'acide) qu'on élimine par filtration. Le filtrat est évaporé à sec. Finalement l'ester désiré est purifié par distillation sous vide (point d'ébullition : $E_3$ = 135 - 138 ° C).

Synthèse du 3-Nitro 4- (4'- Nméthyl Nmétacryloyloxyéthyl Amino) Benzène Azo) 1-Carbonyloxy 3-Cinnamoyloxy propyle

Cette synthèse, s'effectuant au cours d'une sixième étape, consiste à faire réagir les produits obtenus à l'issue des étapes III et V selon le protocole expérimental conduisant au 3 nitro 4-(4'- (Nméthyl) N méthacryloyloxy éthylamino) benzène azo) carbonyloxy glycidyl). Le produit brut est purifié par chromatographie sur silice avec comme éluant le Toluène suivie d'une recristallisation dans le cyclohexane (point de fusion F = 80 ° C).

Le copolymère correspondant est ensuite obtenu par polymérisation radicalaire dans la diméthylformamide (DMF). Il est précipité dans l'éthanol en lumière inactinique, lavé à l'éther puis séché sous vide.

EXEMPLE III

Cet exemple concerne la synthèse d'un polymère de type polyacrylique , dont la structure moléculaire est indiquée figure V ; le schéma réactionnel étant illustré par la figure VI.

La synthèse du monomère colorant se fait en 6 étapes à partir du paraformaldéhyde, de l'aniline et du 3 bromopropanol.

Synthèse du composé bisulfitique du méthanal

Dans un récipient muni d'une agitation magnétique, on dissout 60g de bisulfite de sodium($NaHSO_3$) dans 90ml d'eau. On ajoute 16g de paraformaldéhyde et on chauffe jusqu'à l'obtention d'une solution limpide. On laisse refroidir à la température ambiante et on ajoute alors 100ml d'éthanol. On laisse cristalliser une nuit au congélateur. On filtre l'insoluble et on le sèche sous vide. On obtient 53,75g de produit (rendement 66,3%).

Synthèse de l'anilino N- méthylène sulfonate de sodium

Dans un récipient de 250ml muni d'une agitation magnétique, on dissout 49,95g (0,328 mole) de composé bisulfitique du méthanal dans 150ml d'eau puis on ajoute 33g d'aniline (0,355 mole).

On chauffe à 70 ° C pendant 30mn. Le milieu devient homogène.

Le milieu est refroidi à 4 ° C pendant 16 heures. Il y a prise en masse.

Le sel est séparé par filtration, puis lavé à l'éther et séché sous vide.

On obtient 45,68g de composé (rendement 66,6%).

Synthèse du 4- (4 (Amino) phenylazo) - 3 - nitrobenzoate de lithium.

Dans un récipient muni d'une agitation magnétique on dissout 11,04g (0,0528 mole) d'anilino N méthylène sulfonate de sodium dans 148ml d'une solution 0,85 molaire d'acétate de sodium. La solution est refroidie au moyen d'un mélange eau-glace. A cette solution, on ajoute goutte à goutte la solution de sel de diazonium obtenue à partir de 8g (0,0439 mole) d,acide 3 nitro 4 aminobenzoïque. On obtient une boue

noire. On laisse revenir à la température ambiante et on agite pendant 4 heures puis on met le milieu réactionnel durant 16 heures à 4 ° C.

On sépare l'insoluble par filtration. Le dérivé azoïque ainsi protégé est mis en solution dans 192ml d'une solution normale de LiOH. On chauffe pendant 1h30 à 87 ° C. Un précipité se forme.

On laisse revenir à la température ambiante.

On sépare le solide $F_1$ par filtration (m = 5,42g). Le filtrat est acidifié par HCl 6N jusqu'à pH = 2,7. On obtient un solide rouge $F_2$ (m = 3,32g).

$F_1$ est le sel de lithium

$F_2$ est l'acide libre.

Le rendement brut en sel de lithium est 42,4%

Le rendement brut en dérivés azoïques est 68,8%

Synthèse du méthacrylate de 3 bromopropyle

Dans un récipient de 250ml muni d'une agitation magnétique, on dissout 11,50g (0,11 mole) de chlorure de méthacryloyle dans 100ml de benzene. On ajoute goutte à goutte une solution de 13,9g (0,1 mole) de 3 bromopropanol et 11,1g (0,11 mole) de triéthylamine dans 50ml de benzène. On agite à la température ambiante pendant 8 heures.

Le milieu réactionnel est ensuite coulé dans l'eau acidifiée par HCl.

On extrait au benzène.

Le produit brut est purifié par distillation sous vide $E_5$ = 78-82 ° C. Rendement 35%.

Synthèse du 4 - (2 - Nitro - 4 - (méthacryloyloxy propyloxy carbonyl) phenyl azo) amiline

Le mode opératoire est identique à celui du 3 nitro 4 - (4' - (N méthyl N méthacryloyloxy éthylamino) benzène azo) carbonyloxyglycidyl).

F = 126 ° C Rendement $\rho$ = 48%

L'homopolymère dérivé du 4 - (2 - nitro - 4 - (méthacryloyloxypropylcarbonyl) phenyl azo) aniline est obtenu par polymérisation radicalaire dans le DMF à 60 ° C pendant 24 heures (amorceur AIBN).

Rendement 79%, température de transition vitreuse Tg = 108,5 ° C.

Le copolymère obtenu dans les mêmes conditions a une Tg = 117 ° C pour x = 0.51.

Obtention de films orientés et réticulés

Dans le cas des polymères photoréticulables, un film de copolymère d'environ 1 $\mu$m d'épaisseur est déposé sur un substrat convenablement choisi (de préférence, verre recouvert d'ITO) par une technique connue de l'art antérieur (centrifugation).

Le film est orienté sous l'action d'un champ électrique continu intense créé par une ionisation de l'air délivrée par une pointe métallique portée à très haute tension 4kV selon la méthode Corona, à une température voisine de la Tg du copolymère. Puis, toujours en appliquant le champ électrique, le matériau est réticulé par irradiation au moyen d'une lampe UV ($\lambda$ = 350nm).

Dans le cas des polymères réticulables thermiquement on procède de la manière suivante :

A la solution de copolymère préparée pour l'enduction du substrat, on ajoute une petite molécule polyfonctionnelle capable de réagir avec le groupement réticulable porté par le colorant, en quantité telle que l'on ait :

$$0,5 \leq \frac{\text{Nbre de fonctions portées par les petites molécules}}{\text{Nbre de fonctions réticulables portées par le copolymère}} \leq 1,5$$

Après dépot du film de polymère sur le substrat, le solvant est éliminé sous vide à la température ambiante.

Le film est ensuite soumis au champ de polarisation et la température est montée graduellement jusqu'à une température voisine de la Tg du copolymère initial. Le temps de cuisson est au préalable déterminé par étude en spectrométrie Infra-rouge de la disparition des fonctions réticulables en fonction du temps de cuisson.

Dans le cas des copolymères portant une fonction époxyde sur le chromophore, les molécules polyfonctionnelles pourront être choisies parmi des
polyamines :

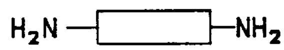

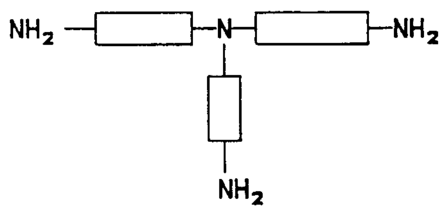

des polyols :

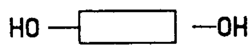

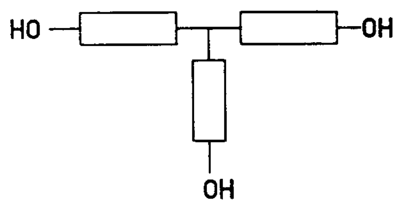

Dans le cas des polymères terminés par une fonction amine les molécules polyfonctionnelles seront des époxydes :

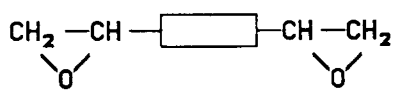

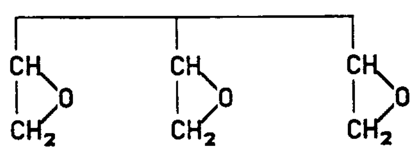

A titre d'exemple, nous décrivons la réticulation du copolymère, dont la structure chimique est présentée figure I, à l'aide d'une petite molécule tétramine dont la structure chimique est présentée en figure VII.

Dans un premier temps, nous avons entrepris une étude de réticulation, par infra-rouge sur un système-modèle constitué de polyméthacrylate de glycidyle (PGMA), dont la structure chimique est présentée ci-après :

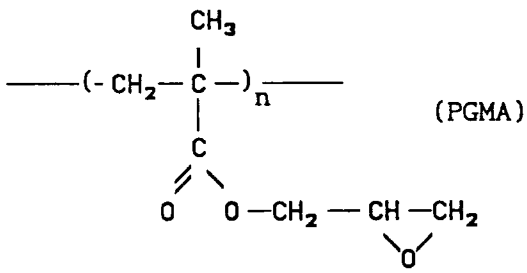

(PGMA)

et de la tétramine précédemment citée, en quantité stoechiométrique (nombre de fonctions amine = nombre de fonctions époxy).

En pratique, une solution à 120g/l de PGMA dans le tétrahydrofuranne (THF) est réalisée. A celle-ci est ajoutée la tétramine pure. Le dépôt de la solution à la tournette est effectué sur une plaque de CsCl à raison de 1000 tr/min pendant 30 sec. Après séchage rapide au sèche-cheveux, la plaque de CsCl est mise à l'étuve à la température choisie, et des enregistrements de spectres IR sont effectués à différents temps (longs devant la durée d'enregistrement d'un spectre : 6 min) en prenant soin de repositionner l'échantillon de façon identique à chacune des mesures. Des enregistrements ont été ainsi effectués à 80 °C et 110 °C. Nous avons exploité pour cette étude les bandes esters à 1720 cm-1, servant de référence interne dans le spectre, et la bande de déformation δNH des amines primaires à 1560 cm-1. L'observation de l'évolution en fonction du temps du rapport des absorbances à 1720 cm-1 et 1560 cm-1 pour les deux températures considérées a permis d'évaluer le temps au bout duquel les fonctions amines ne peuvent plus réagir (plus d'évolution du rapport des absorbances) et donc le temps maximum nécessaire à la réticulation pour une température T donnée. Il apparaît ainsi qu'à 110 °C, il faut au plus 30 min pour obtenir le taux de réticulation maximal, alors qu'il faut près de 2HOO à 80 °C.

Nous avons pu vérifier la réticulation de notre échantillon de façon qualitative en plongeant celui-ci dans du THF : le film reste insoluble dans ces conditions.

A l'aide des renseignements apportés par ces expériences, notamment le temps approximatif nécessaire à la réticulation entre un polymère porteur de fonctions époxy et une petite molécule polyamine à environ 110 °C, ainsi que les bandes caractéristiques en IR susceptibles de nous permettre de suivre l'avancement de la réticulation, nous avons entrepris dans un deuxième temps l'étude de la réticulation dans le cas de notre copolymère + la tétramine.

Nous avons réalisé la même expérience que précédemment, à la température de 107 °C, en partant d'une solution 120 g/l de copolymère dans le THF + tétramine pure en quantité stoechiométrique.

La bande à 1560 cm-1 étant très peu visible sur le spectre aux faibles conversions en amine primaire, et très vite masquée sur le spectre IR par les bandes d'absorption à 1590 cm-1 et 1510 cm-1, il nous a été difficile de cette façon d'apprécier l'évolution de la réaction.

De manière à obtenir des informations plus précises, notamment au sujet de l'évolution des fonctions époxy du copolymère, nous avons cherché à établir des spectres beaucoup mieux résolus en fréquence. Pour cela, nous avons utilisé un spectromètre IR à transformée de Fourier (NICOLET). Pour cette étude préliminaire, 3 dépôts à la tournette ont été réalisés sur des pastilles KBr : un dépôt du copolymère seul ainsi que deux dépôts à partir du mélange stoechiométrique copolymère/ tétramine. Parmi ces derniers, l'un a subi un traitement de 16 min à 110 °C, l'autre un traitement de 20HOO à 110 °C.

L'analyse des spectres obtenus nous a permis de relever l'évolution de deux bandes relatives aux fonctions époxy, l'une à 2900 cm-1, relative aux vibrations de valence du groupement $CH_2$ de l'époxy, l'autre, à 870 cm-1, relative aux vibrations de déformations du cycle époxy (voir les évolutions de ces deux bandes en fonction du taux de réticulation sur la figure VIII). Dans les deux cas, on note une diminution nette de ces bandes avec la réticulation. La diminution des bandes est déjà très importante après un traitement de 16 min à 107 °C, ce qui est en accord avec les observations effectuées sur le système PGMA/Tétramine.

Il ressort de ces expériences qu'un temps de 30 à 40 minutes de cuisson à 110 °C, température voisine de la Tg du copolymère initial, est suffisant pour obtenir une réticulation optimale du système dans son état non orienté.

La réticulation sous orientation a ensuite été mise en oeuvre. Pour cela, une solution à 160 mg/ml de copolymère dans le THF, contenant une quantité stoechiométrique de tétramine est réalisée. Après filtration de cette solution sur filtre millipore 0,2 µm et dépôt à la tournette sur lame de verre à 3000 tours/min, un film d'une épaisseur de 1,2 µm est obtenu.

L'échantillon est ensuite soumis, à température ambiante, à l'application d'un champ de polarisation, par la méthode CORONA. Sur la pointe CORONA utilisée, située à 2,5 cm de la surface de l'échantillon, est appliquée une tension de 5kV.

La température est ensuite augmentée progressivement jusqu'à 120 °C à raison d'environ 10 °C par minute, en même temps que la tension est amenée de 5 à 15 kV.

L'échantillon est laissé dans ces conditions (120 °C, 15 kV), pendant une durée de 30 min, temps nécessaire à la réticulation thermique du système.

Puis la température est ramenée à l'ambiante tout en maintenant appliqué le champ de polarisation.

Un essai de dissolution du film dans le THF confirme la réticulation dans les conditions adoptées.

## Revendications

**1.** Polymère réticulable utilisable en optique non linéaire, le polymère étant constitué d'un squelette sur lequel sont rattachées des chaines latérales, dont une première assure un caractère amorphe au polymère, caractérisé en ce que le squelette est de type polyacrylique ou de type polystyrène ou de type polysiloxane, le polymère comprenant en outre une seconde chaîne latérale capable de générer des effets non linéaires grâce à la présence d'une entité A comprenant un groupe donneur d'électrons, un ou deux groupes accepteurs d'électrons et un système à électrons $\pi$ conjugués, ladite entité A se terminant par un groupement R réticulable thermiquement ou photochimiquement, ledit groupement R faisant partie ou non de l'entité génératrice d'effets optiques non linéaires et faisant partie ou non de la première chaîne latérale assurant le caractère amorphe au polymère et pouvant être :

* lorsque R ne fait pas partie de l'entité A :

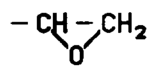

ou

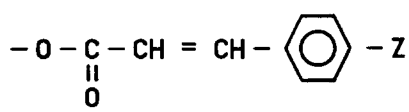

avec Z = H, $-O-C_wH_{2w+1}$ et $1 \leqq w \leqq 10$

ou

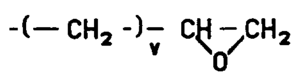

et $1 \leqq v \leqq 15$

ou

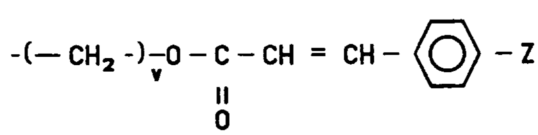

et $2 \leqq v \leqq 15$

et Z = H, $-O-C_wH_{2w+1}$ avec $0 \leqq w \leqq 3$

ou

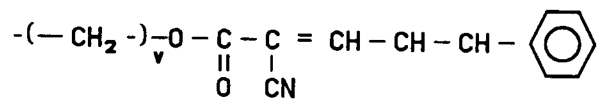

et 2 ≦ v ≦ 15

* intégré au groupement suivant s'il fait partie de l'entité A :

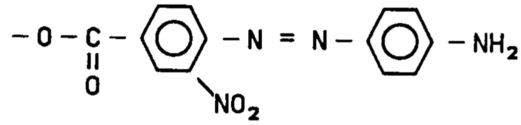

2. Polymère réticulable selon la revendication 1, caractérisé en ce que le groupement réticulable ne fait pas partie de l'entité génératrice d'effets optiques non linéaires.

3. Polymère réticulable selon la revendication 1, caractérisé en ce que le groupement réticulable fait partie de l'entité génératrice d'effets optiques non linéaires.

4. Polymère réticulable selon les revendications 1 et caractérisé en ce qu'il est de type polyacrylique et qu'il répond à la formule suivante :

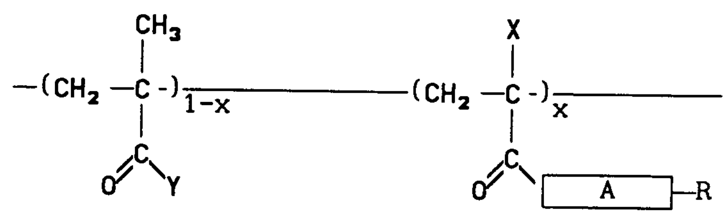

où x fraction molaire

X = H,$CH_3$,Cl

Y = -O—$C_nH_{2n+1}$ et 1≦n≦15 , —O—$(CH_2)_m$—R- avec 1≦m≦10

où R : groupement réticulable chimiquement

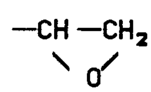

ou R : groupement photoréticulable

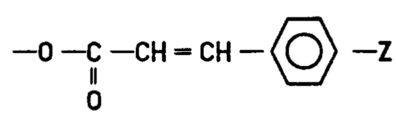

et Z = H, -O—$C_wH_{2w+1}$ avec 1≦w≦10

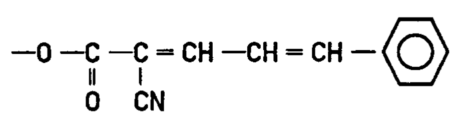

A entité génératrice des effets optiques du second ordre comprend un groupe donneur d'électrons, un

ou deux groupes accepteurs d'électrons et un système à électrons $\pi$ conjugués, pouvant être :

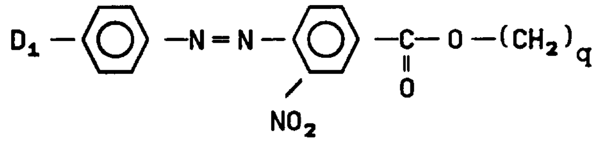

avec $1 \leqq q \leqq 10$
avec $D_1$ :

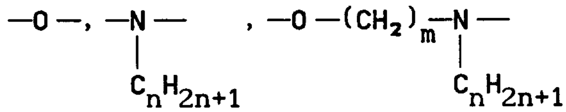

et $0 \leqq n \leqq 3$, $2 \leqq m \leqq 15$
ou

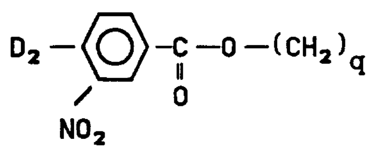

avec $1 \geqq q \leqq 10$
avec $D_2$ :

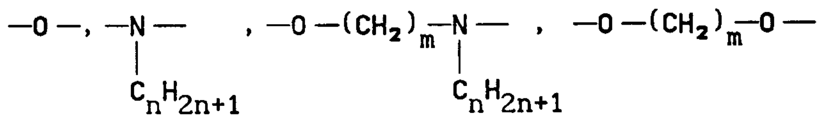

et $0 \leqq n \leqq 3$ , $2 \leqq m \leqq 15$
ou

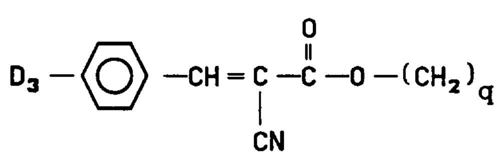

avec $1 \leqq q \leqq 10$
avec $D_3$ :

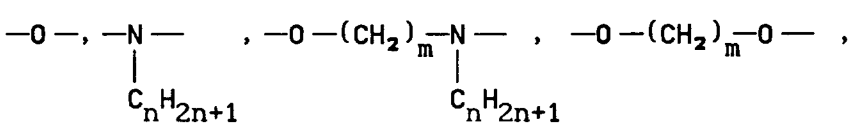

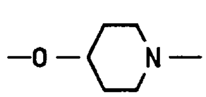

et $0 \leqq n \leqq 3$ , $2 \leqq m \leqq 15$

**5.** Polymère réticulable selon les revendications 1 et caractérisé en ce qu'il est de type polyacrylique et qu'il répond à la formule suivante :

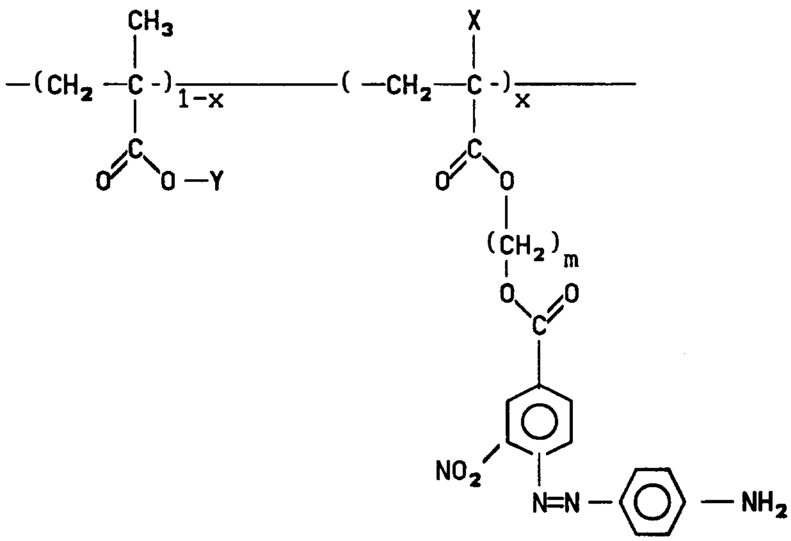

où x fraction molaire

X = H,$CH_3$,Cl

Y = -O—$C_nH_{2n+1}$ et $1 \leqq n \leqq 10$ , —$NH_2$ , —O—$(CH_2)_q$—$NH_2$ et $2 \leqq q \leqq 15$ $2 \leqq m \leqq 15$

**6.** Polymère réticulable selon les revendications 1 et caractérisé en ce qu'il est de type polysiloxane et qu'il répond à la formule suivante :

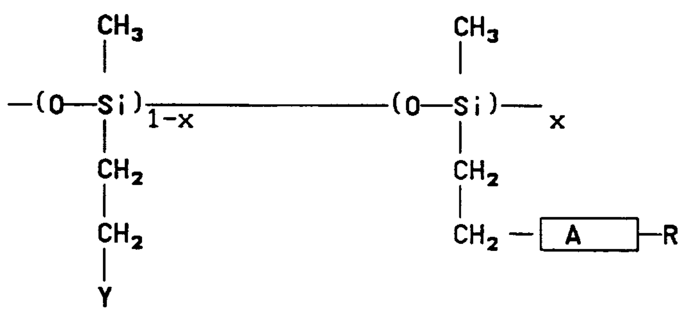

où : Y est —$C_nN_{2n+1}$ avec $2 \leqq n \leqq 13$

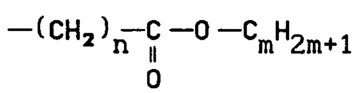

avec $1 \leqq n \leqq 13$ et $1 \leqq m \leqq 15$

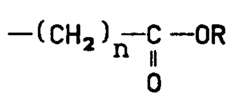

avec $1 \leqq n \leqq 13$

où R : groupement réticulable chimiquement

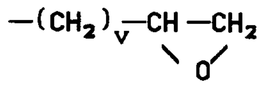

avec 1≦v≦15

ou R : groupement photoréticulable

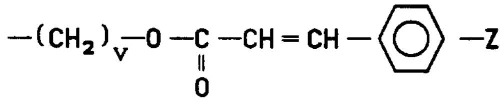

avec 2≦v≦15

et Z = H, -O—$C_wH_{2w+1}$ avec 0≦w≦3

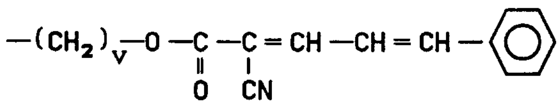

avec 2≦v≦15

A entité génératrice des effets optiques du second ordre :

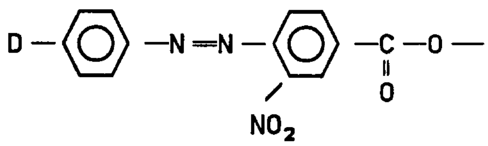 , 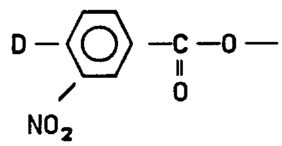 ,

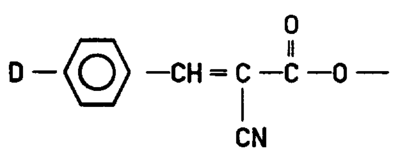

avec D :

$-(CH_2)_n-O-$ , 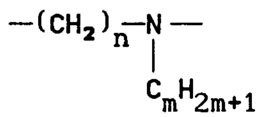

**7.** Polymère réticulable selon les revendications 1 et 3, caractérisé en ce qu'il est de type polysiloxane et qu'il répond à la formule suivante :

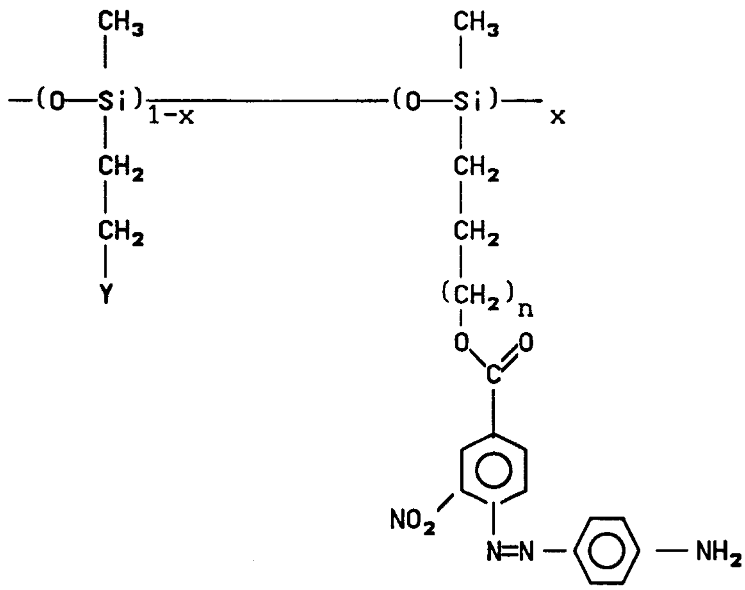

avec $1 \leqq n \leqq 13$

où Y : $-C_mN_{2m+1}$ , $-(CH_2)_m-NH_2$ et $1 \leqq m \leqq 13$

8. Polymère réticulable selon les revendications 1 et 2, caractérisé en ce qu'il est de type polystyrène et qu'il répond à la formule suivante :

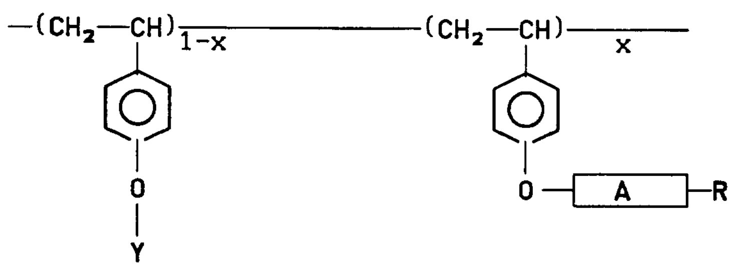

où : Y est $-C_nH_{2n+1}$ avec $0 \leqq n \leqq 10$ , R

R :

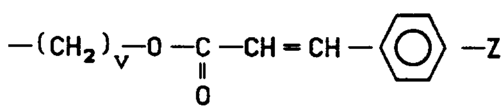

avec $2 \leqq v \leqq 15$

et Z = H,-O$-C_wH_{2w+1}$ avec $0 \leqq w \leqq 3$

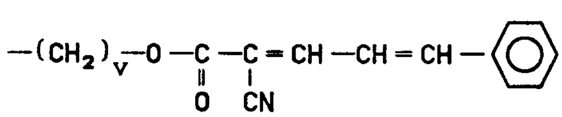

avec $2 \leqq v \leqq 15$

A entité génératrice des effets optiques du second ordre :

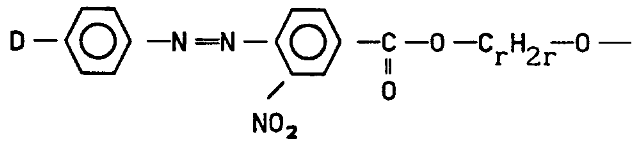

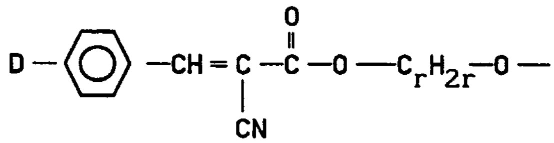 , 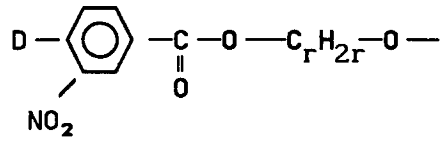

avec $2 \leq r \leq 15$
avec D :

$-(CH_2)_v-O-$ , 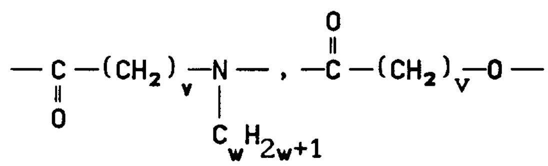

et $1 \leq v \leq 15$, $0 \leq w \leq 3$

**9.** Polymère réticulable selon la revendication 1 et 3, caractérisé en ce qu'il est de type polystyrène et qu'il répond à la formule suivante :

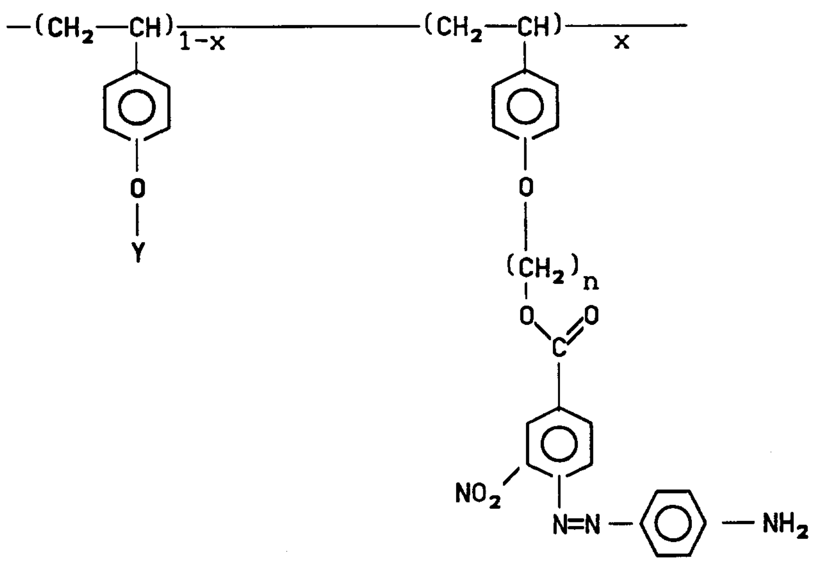

avec $1 \leq n \leq 15$ où Y : $-C_mH_{2m+1}$ ,

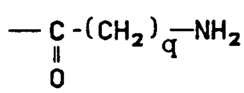

avec $0 \leq m \leq 10$
et $1 \leq q \leq 10$

## Claims

1. Crosslinkable polymer usable in nonlinear optics, the polymer consisting of a backbone to which are attached side chains, the first one of which imparts an amorphous character to the polymer, characterized in that the backbone is of polyacrylic type or of polystyrene type or of polysiloxane type, the polymer additionally including a second side chain capable of generating non-linear effects by virtue of the presence of a unit A including an electron-donor group, one or two electron-acceptor groups and a system containing conjugated $\pi$ electrons, the said unit A ending in a thermally or photochemically crosslinkable group R, the said group R forming or not forming part of the unit generating nonlinear optical effects and forming or not forming part of the first side chain imparting the amorphous character to the polymer, and capable of being:
   - when R does not form part of the unit A:

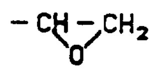

or

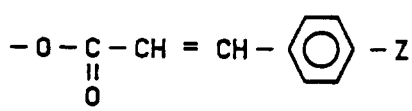

with $Z = H, -O-C_wH_{2w+1}$ and $1 \leqq w \leqq 10$
or

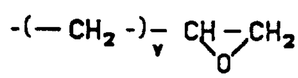

and $1 \leqq v \leqq 15$
or

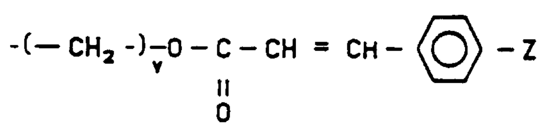

and $2 \leqq v \leqq 15$
and $Z = H, -O-C_wH_{2w+1}$ with $0 \leqq w \leqq 3$
or

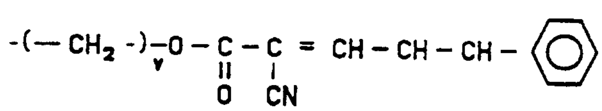

and $2 \leqq v \leqq 15$

- integrated into the following group if it forms part of the unit A:

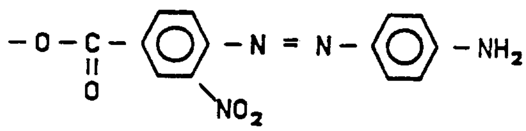

2. Crosslinkable polymer according to Claim 1, characterized in that the crosslinkable group does not form part of the unit generating nonlinear optical effects.

3. Crosslinkable polymer according to Claim 1, characterized in that the crosslinkable group forms part of the unit generating nonlinear optical effects.

4. Crosslinkable polymer according to Claims 1 and 2, characterized in that it is of polyacrylic type and in that it corresponds to the following formula:

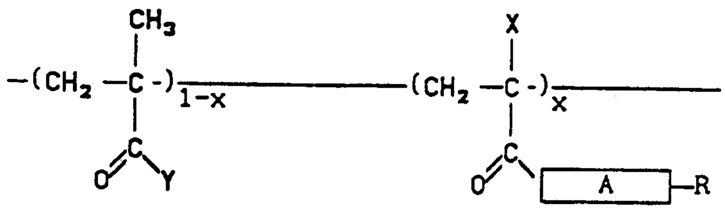

where x : molar fraction
X = H, $CH_3$, Cl
Y = $-O-C_nH_{2n+1}$ and $1 \leq n \leq 15$, $-O-(CH_2)_m-R-$ with $1 \leq m \leq 10$
where R: chemically crosslinkable group

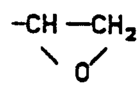

or R: photocrosslinkable group

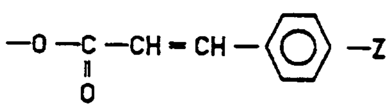

and Z = H, $-O-C_wH_{2w+1}$ with $1 \leq w \leq 10$

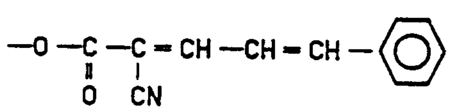

A: unit generating optical effects of the second order comprises an electron-donor group, one or two electron-acceptor groups and a system containing conjugated $\pi$ electrons,
capable of being:

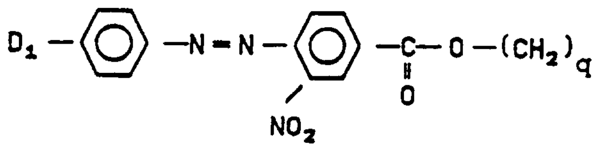

with 1 ≦ q ≦ 10
with $D_1$:

$-O-$, 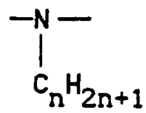 , 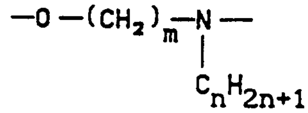

and 0 ≦ n ≦ 3, 2 ≦ m ≦ 15
or

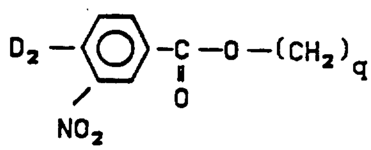

with 1 ≦ q ≦ 10
with $D_2$:

$-O-$, 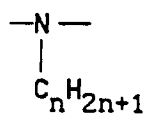 , 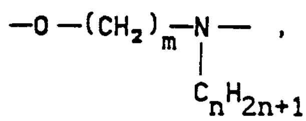 , $-O-(CH_2)_m-O-$

and 0 ≦ n ≦ 3, 2≦ m ≦ 15
or

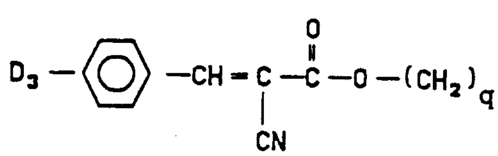

with 1 ≦ q ≦ 10
with $D_3$:

$-O-$, 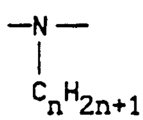 , 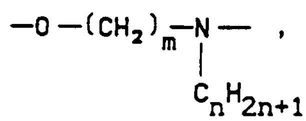 , $-O-(CH_2)_m-O-$ ,

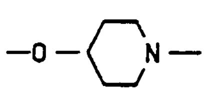

and 0 ≦ n ≦ 3, 2 ≦ m ≦ 15

5. Crosslinkable polymer according to Claims 1 and 3, characterized in that it is of polyacrylic type and in that it corresponds to the following formula:

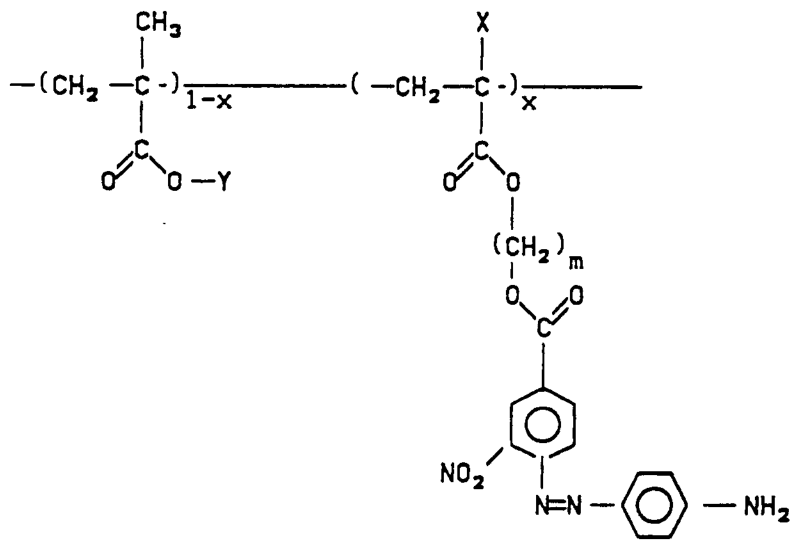

where x : molar fraction
X = H, $CH_3$, Cl
Y = $-O-C_nH_{2n+1}$ and $1 \leqq n \leqq 10$, $-NH_2$, $-O-(CH_2)_q-NH_2$ and $2 \leqq q \leqq 15$ $2 \leqq m \leqq 15$.

6. Crosslinkable polymer according to Claims 1 and 2, characterized in that it is of polysiloxane type and in that it corresponds to the following formula:

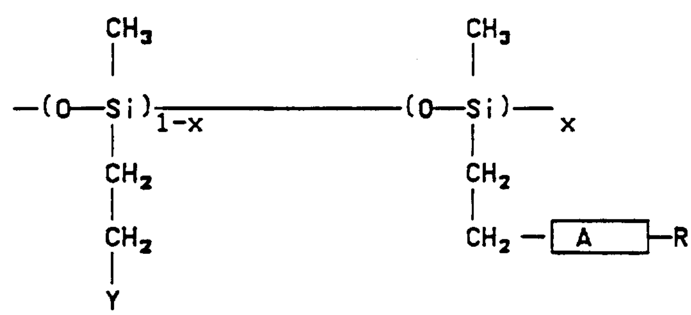

where: Y is $-C_nH_{2n+1}$ with $2 \leq n \leq 13$

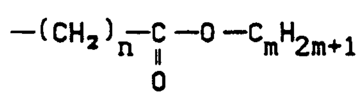

with $1 \leq n \leq 13$ and $1 \leq m \leq 15$

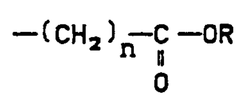

with $1 \leq n \leq 13$
where R: chemically crosslinkable group

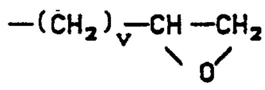

with $1 \leqq v \leqq 15$
or R: photocrosslinkable group

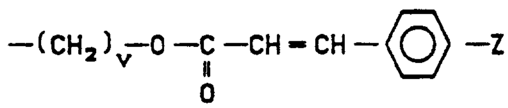

with $2 \leqq v \leqq 15$
and Z = H, $-O-C_wH_{2w+1}$ with $0 \leqq w \leqq 3$

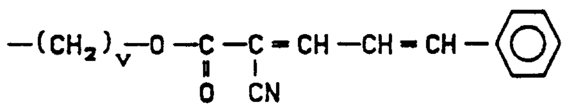

with $2 \leqq v \leqq 15$
A: unit generating optical effects of the second order:

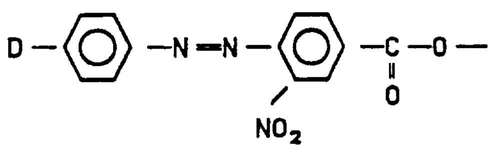 , 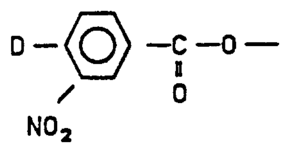 ,

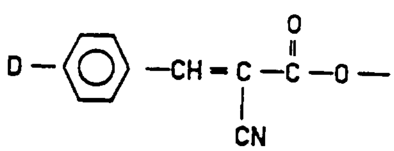

with D:

$-(CH_2)_n-O-$ , 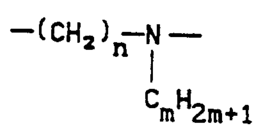

**7.** Crosslinkable polymer according to Claims 1 and 3, characterized in that it is of polysiloxane type and in that it corresponds to the following formula:

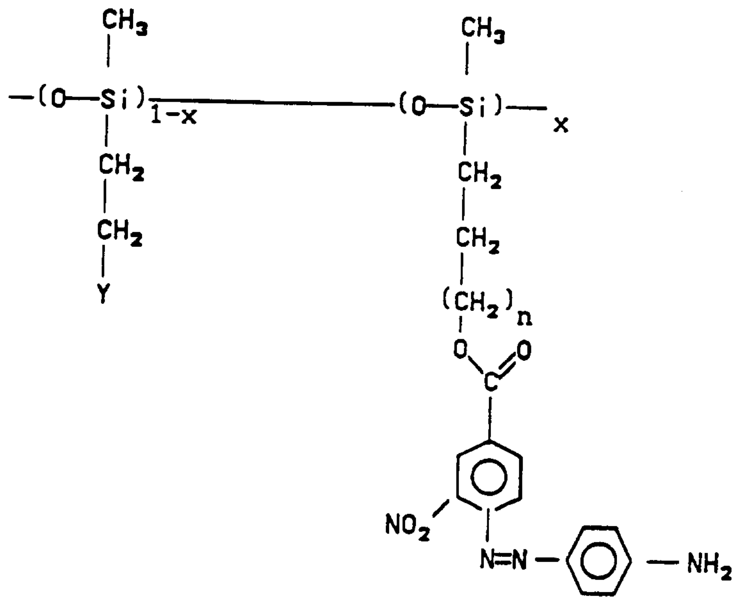

with $1 \leqq n \leqq 13$

where Y: $-C_mH_{2m+1}$, $-(CH_2)_m-NH_2$ and $1 \leqq m \leqq 13$

**8.** Crosslinkable polymer according to Claims 1 and 2, characterized in that it is of polystyrene type and in that it corresponds to the following formula:

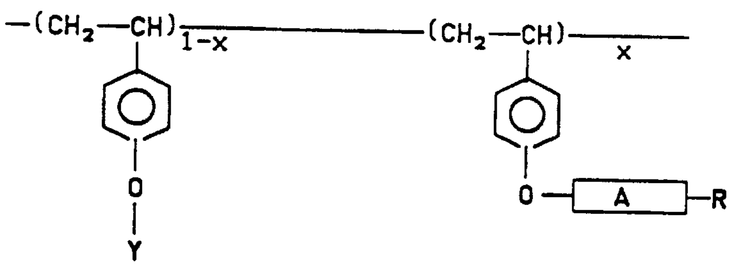

where: Y is $-C_nH_{2n+1}$ with $0 \leqq n \leqq 10$, R

R: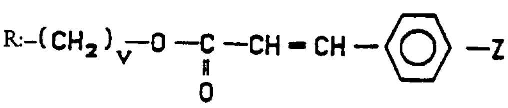

with $2 \leqq v \leqq 15$

and Z = H, $-O-C_wH_{2w+1}$ with $0 \leqq w \leqq 3$

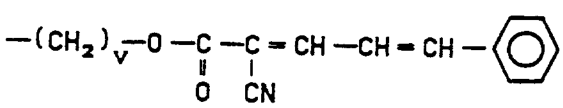

with $2 \leqq v \leqq 15$

A: unit generating optical effects of the second order:

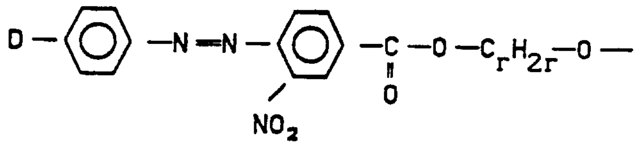

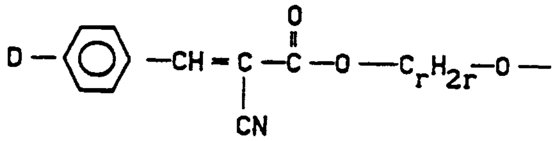
,
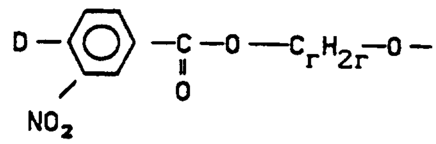

with $2 \leqq r \leqq 15$
with D :

$-(CH_2)_v-O-$ ,
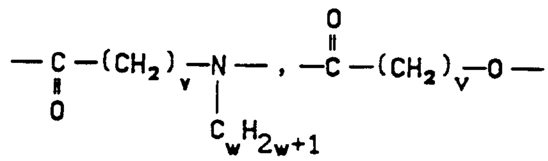

and $1 \leqq v \leqq 15$, $0 \leqq w \leqq 3$

9. Crosslinkable polymer according to Claim 1 and 3, characterized in that it is of polystyrene type and in that it corresponds to the following formula:

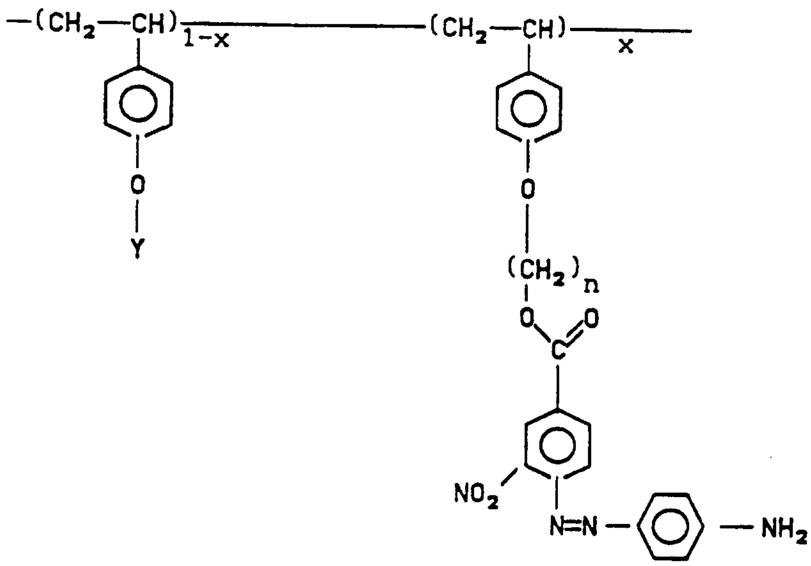

with $1 \leqq n \leqq 15$
where Y : $-C_mH_{2m+1}$,

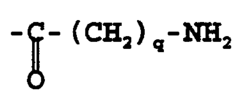

with $0 \leqq m \leqq 10$
and $1 \leqq q \leqq 10$

## Patentansprüche

**1.** Vernetzbares Polymer zur Anwendung in der nichtlineraren Optik, wobei das Polymer aus einem Gerüst besteht, an das Seitenketten gebunden sind, wovon eine erste dem Polymer einen amorphen Charakter verleiht, dadurch gekennzeichnet, daß das Gerüst vom Polyacrylat- oder Polystyrol- oder Polysiloxan-Typ ist und daß das Polymer außerdem eine zweite Seitenkette umfaßt, die zur Erzeugung nichtlinearer Wirkungen dank der Gegenwart einer Einheit A in der Lage ist, welche eine Elektronendonorgruppe, eine oder zwei Elektronenakzeptorgruppenund ein System konjugierter $\pi$-Elektronen umfaßt, wobei die Einheit A eine endständige Gruppe R aufweist, die thermisch oder photochemisch vernetzbar ist und die Teil oder nicht Teil der die nichtlinearen optischen Wirkungen erzeugenden Einheit und Teil oder nicht Teil der ersten Seitenkette, die dem Polymer den amorphen Charakter verleiht, sein kann und folgende Bedeutungen besitzen kann:

* falls R nicht Teil der Einheit A ist:

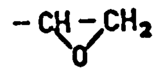

oder

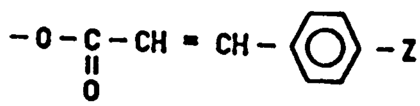

mit Z = H, -O-$C_wH_{2w+1}$ und $1 \leqq w \leqq 10$

oder

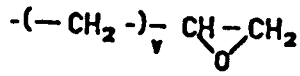

und $1 \leqq v \leqq 15$

oder

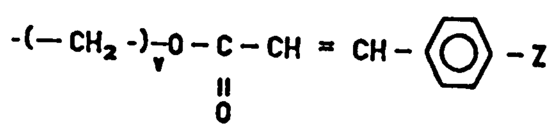

und $2 \leqq v \leqq 15$

und Z = H, -O-$C_wH_{2w+1}$ mit $0 \leqq w \leqq 3$

oder

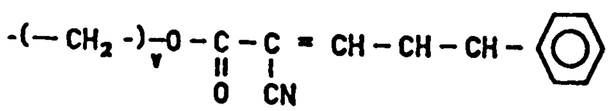

und $2 \leqq v \leqq 15$

* eingebaut in die folgende Gruppe, falls sie Teil der Einheit A ist:

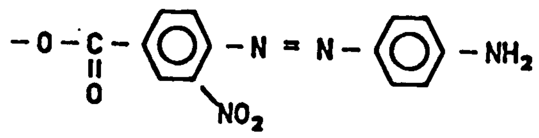

2. Vernetzbares Polymer nach Anspruch 1, dadurch gekennzeichnet, daß die vernetzbare Gruppe nicht Teil der die nichtlinearen optischen Wirkungen erzeugenden Einheit ist.

3. Vernetzbares Polymer nach Anspruch 1, dadurch gekennzeichnet, daß die vernetzbare Gruppe Teil der die nichtlinearen optischen Wirkungen erzeugenden Einheit ist.

4. Vernetzbares Polymer nach den Ansprüchen 1 und 2, dadurch gekennzeichnet, daß es vom Polyacrylat-Typ ist und der folgenden Formel entspricht:

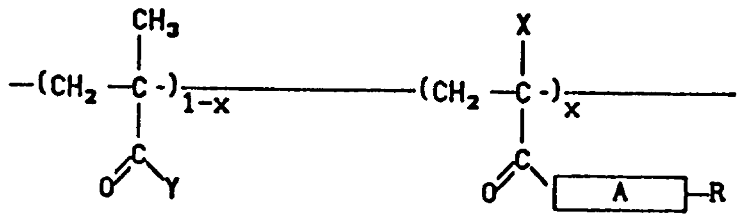

worin x der Molenbruch
X = H, $CH_3$, Cl
Y = $-O-C_nH_{2n+1}$ und $1 \leq n \leq 15$ , $-O-(CH_2)_m-R-$ mit $1 \leq m \leq 10$
worin R die chemisch vernetzbare Gruppe

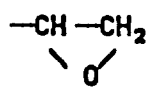

oder R die photovernetzbare Gruppe

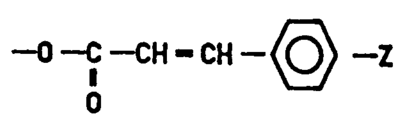

und Z = H, $-O—C_wH_{2w+1}$ mit $1 \leq w \leq 10$

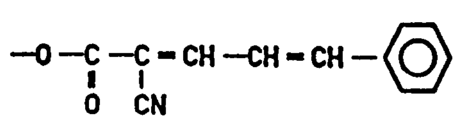

ist und
A eine Einheit ist, die optische Wirkungen der zweiten Ordnung erzeugt und eine Elektronendonorgruppe, eine oder zwei Elektronenakzeptorgruppen und ein System konjugierter π-Elektronen umfaßt und sein kann:

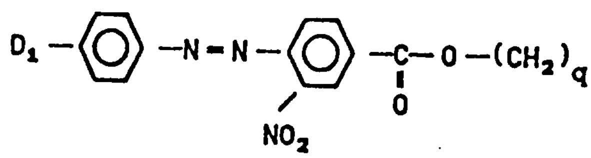

mit 1≦q≦10

mit $D_1$ :

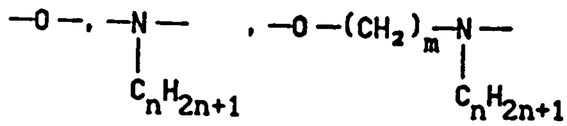

und 0≦n≦3 , 2≦m≦15

oder

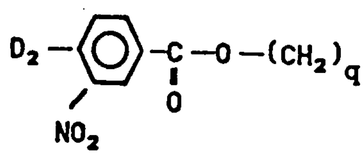

mit 1≦q≦10

mit $D_2$ :

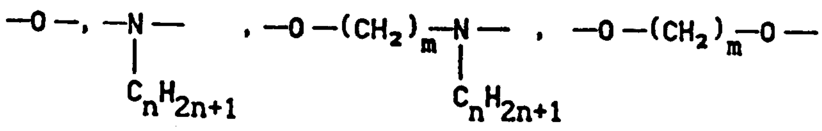

und 0≦n≦3 , 2≦m≦15

oder

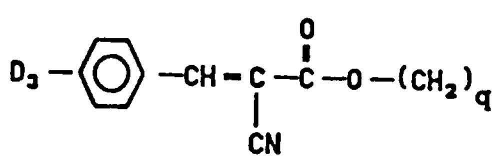

mit 1≦q≦10

mit $D_3$ :

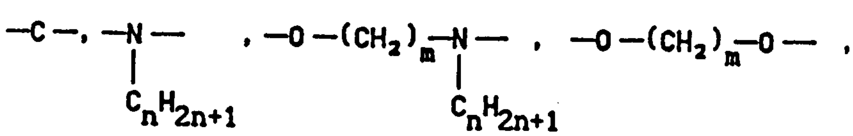

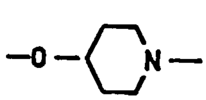

und 0≦n≦3 , 2≦m≦15

**5.** Vernetzbares Polymer nach den Ansprüchen 1 und 3, dadurch gekennzeichnet, daß es vom Polyacrylat-Typ ist und der folgenden Formel entspricht:

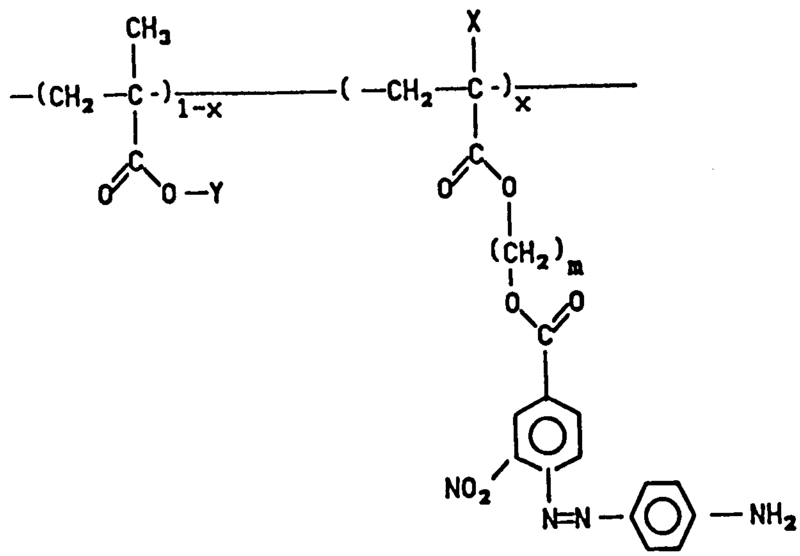

worin x der Molenbruch

X = H, $CH_3$, Cl

Y = $-O-C_nH_{2n+1}$ und $1 \leq n \leq 10$, $-NH_2$, $-O-(CH_2)_q-NH_2-$ und $2 \leq q \leq 15$ $2 \leq m \leq 15$ ist.

**6.** Vernetzbares Polymer nach den Ansprüchen 1 und 2, dadurch gekennzeichnet, daß es vom Polysiloxan-Typ ist und der folgenden Formel entspricht:

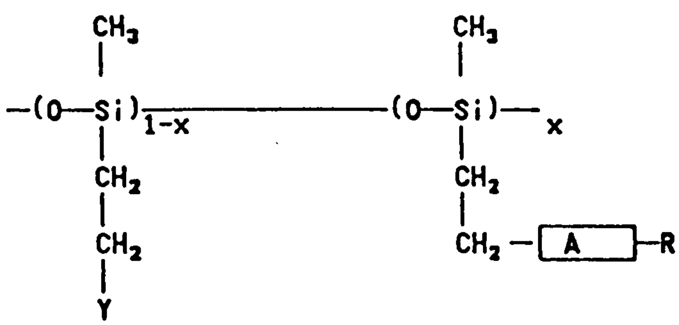

worin : Y $-C_nH_{2n+1}$ mit 2≦n≦13

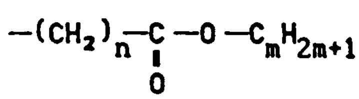

mit 1≦n≦13 und 1≦m≦15

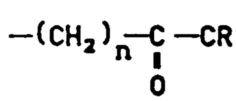

mit 1≦n≦13 ist,

worin R die chemisch vernetzbare Gruppe

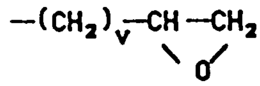

mit 1≦v≦15

oder R die photovernetzbare Gruppe

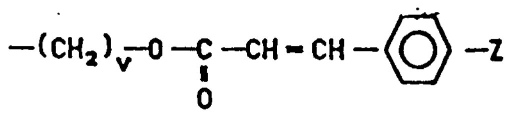

mit 2≦v≦15

und Z = H, $-O-C_wH_{2w+1}$ mit : 0≦w≦3

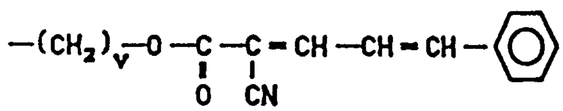

mit 2≦v≦15 ist und

A eine optische Wirkungen der zweiten Ordnung erzeugende Einheit ist:

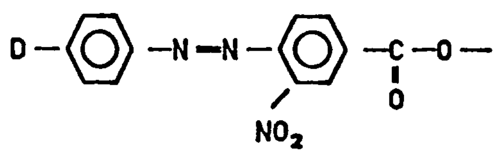
,
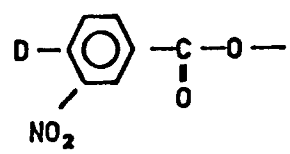
,

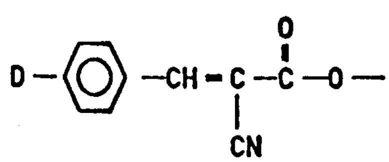

mit D :

$-(CH_2)_n-O-$ ,
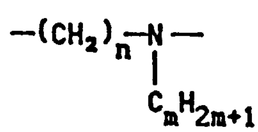

**7.** Vernetzbares Polymer nach den Ansprüchen 1 und 3, dadurch gekennzeichnet, daß es vom Polysiloxan-Typ ist und der folgenden Formel entspricht:

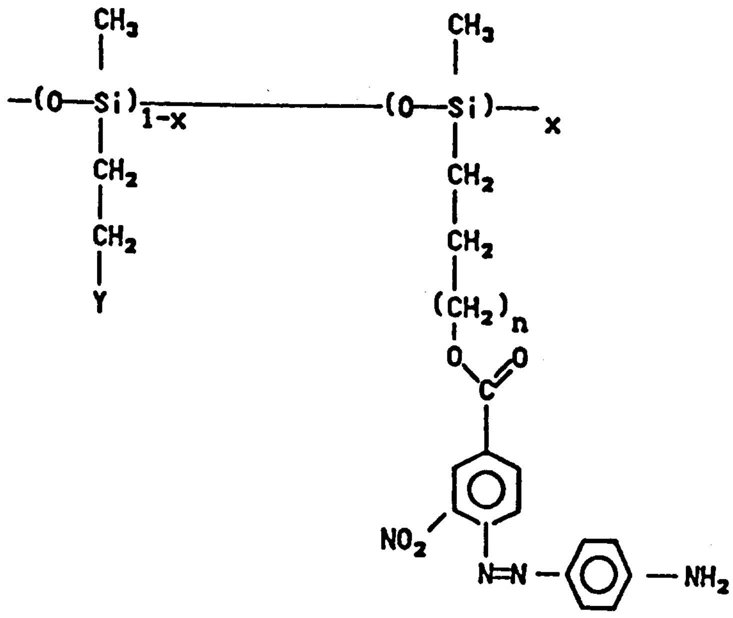

mit 1≦n≦13

worin Y : $—C_mH_{2m+1}$ , $-(CH_2)_m—NH_2$ und 1≦m≦13 ist.

**8.** Vernetzbares Polymer nach den Ansprüchen 1 und 2, dadurch gekennzeichnet, daß es vom Polystyrol-Typ ist und der folgenden Formel entspricht:

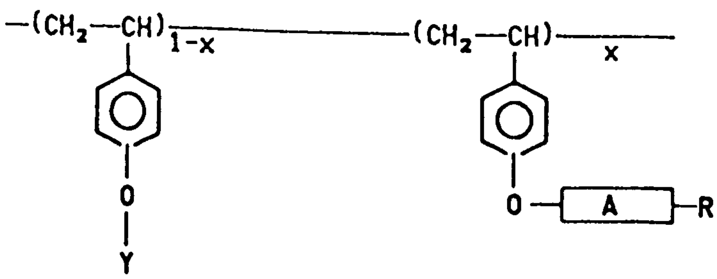

worin Y $—C_nH_{2n+1}$ mit 0≦n≦10 ist, R

R :

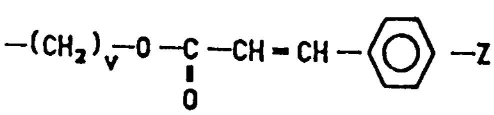

mit 2≦v≦15

und Z = H, $-O—C_wH_{2w+1}$ mit 0≦w≦3

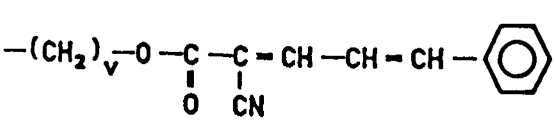

mit 2≦v≦15 ist und

A eine optische Wirkungen der zweiten Ordnung erzeugende Einheit ist:

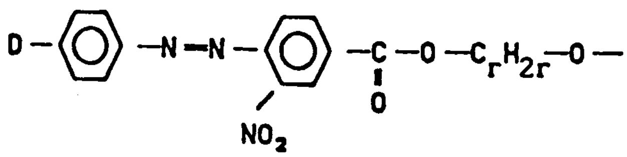

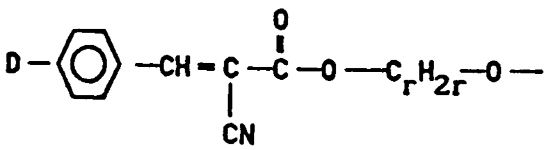
,
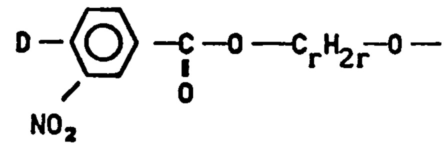

mit $2 \leqq r \leqq 15$

mit D :

$-(CH_2)_v-O-$ ,
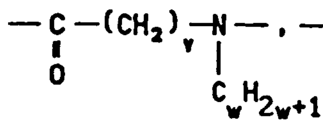
,
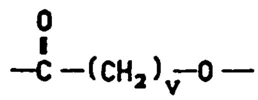

und $1 \leqq v \leqq 15$, $0 \leqq w \leqq 3$

9. Vernetzbares Polymer nach Anspruch 1 und 3, dadurch gekennzeichnet, daß es vom Polystyrol-Typ ist und der folgenden Formel entspricht:

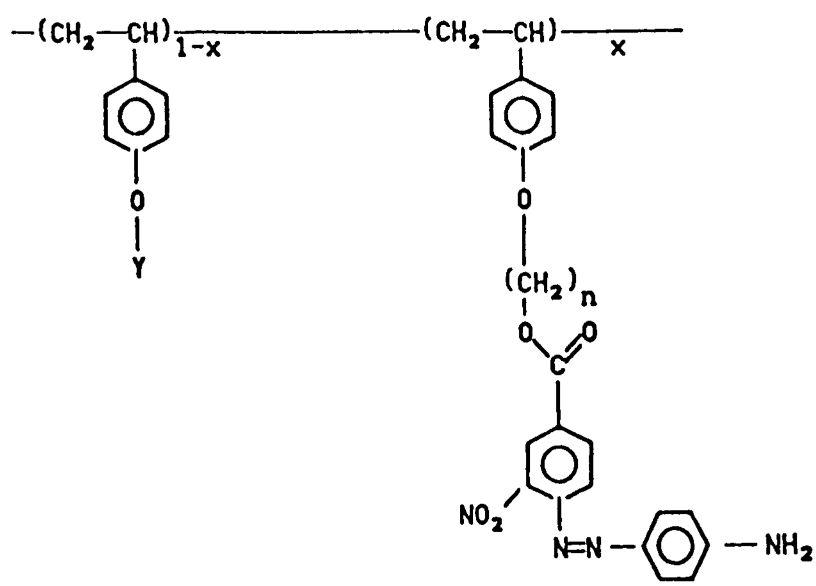

mit $1 \leqq n \leqq 15$

worin Y : $-C_mH_{2m+1}$ ,

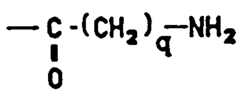

mit $0 \leqq m \leqq 10$

und $1 \leqq q \leqq 10$ ist.

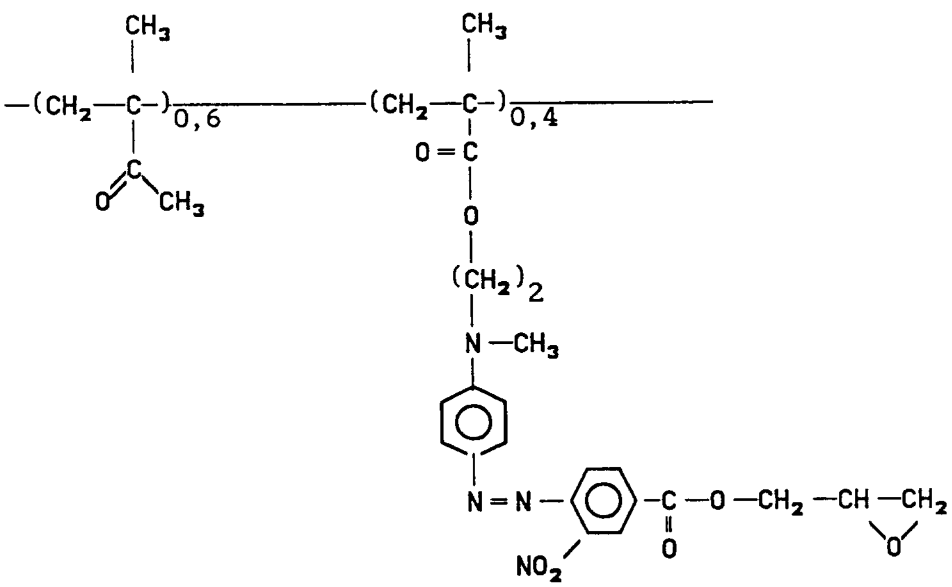

FIGURE I

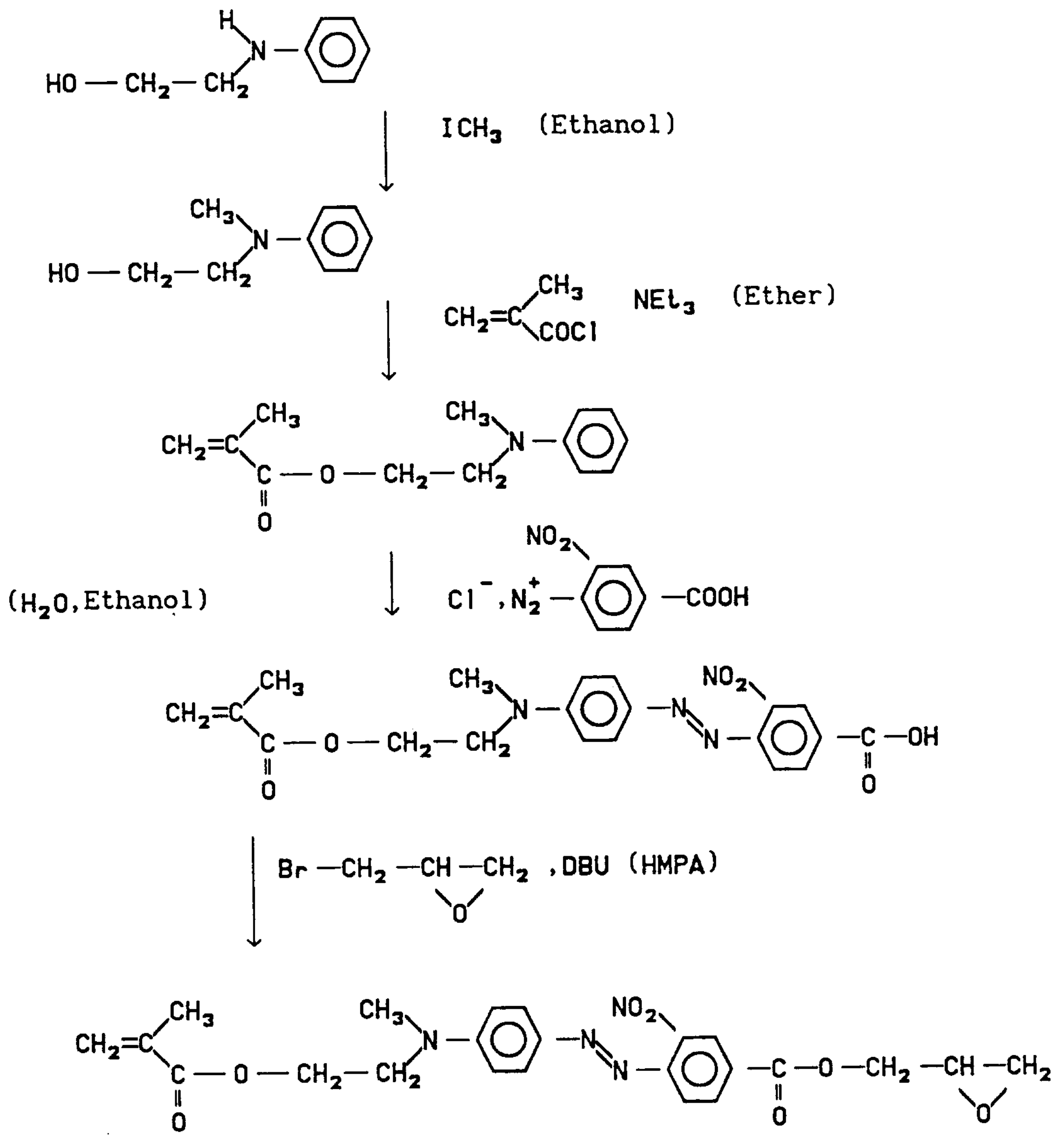


FIGURE II

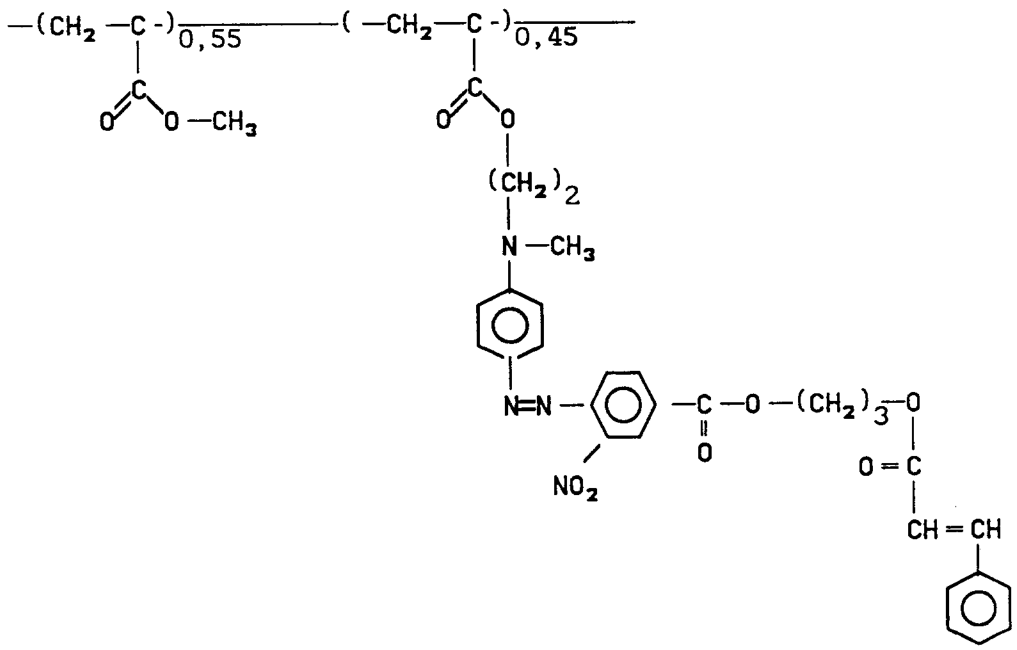

FIGURE III

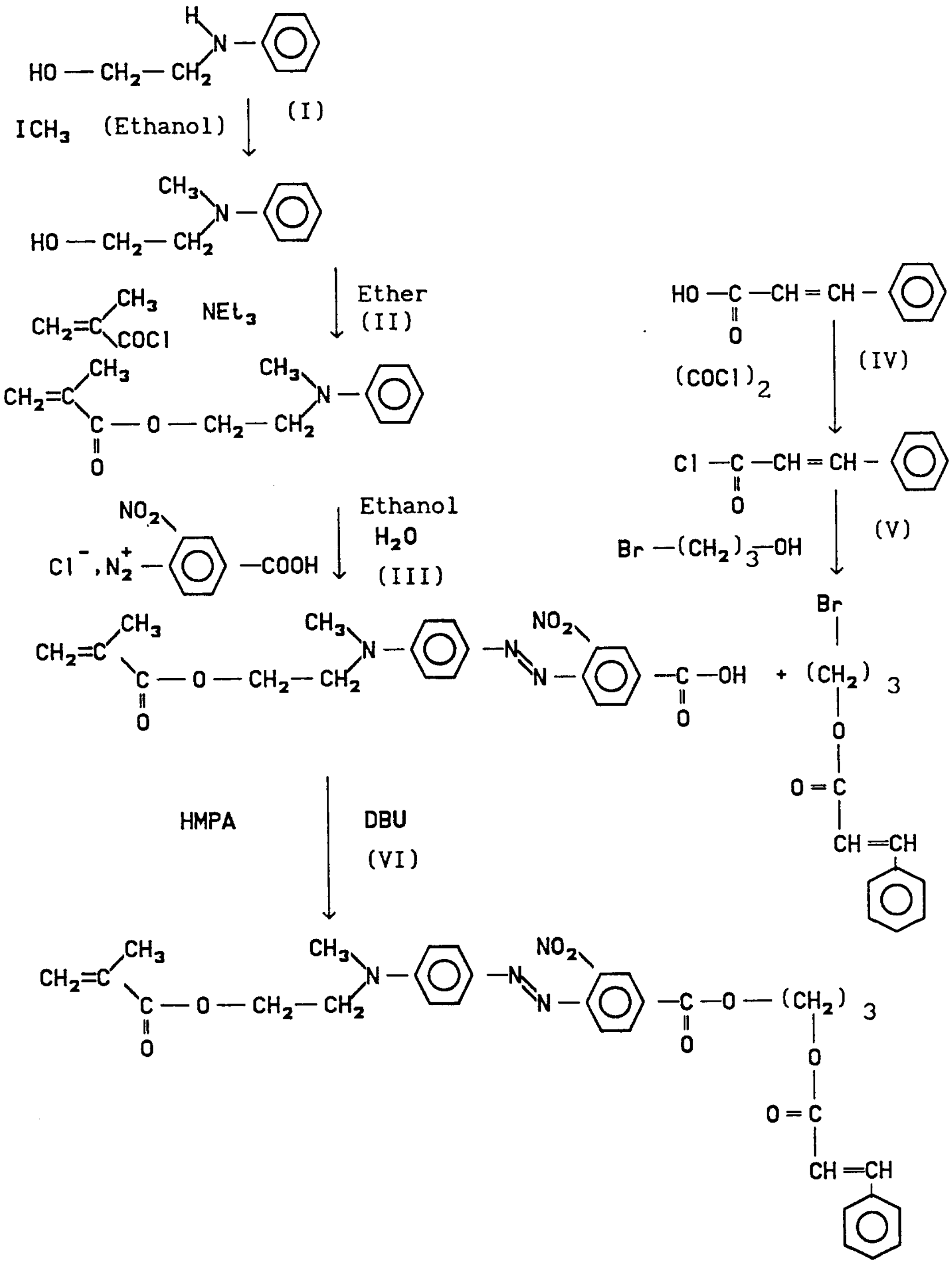
$ICH_3$ (Ethanol)
(I)
Ether
(II)
$NEt_3$
$(COCl)_2$
(IV)
(V)
$Br-(CH_2)_3-OH$
Ethanol
$H_2O$
(III)
HMPA
DBU
(VI)

FIGURE IV

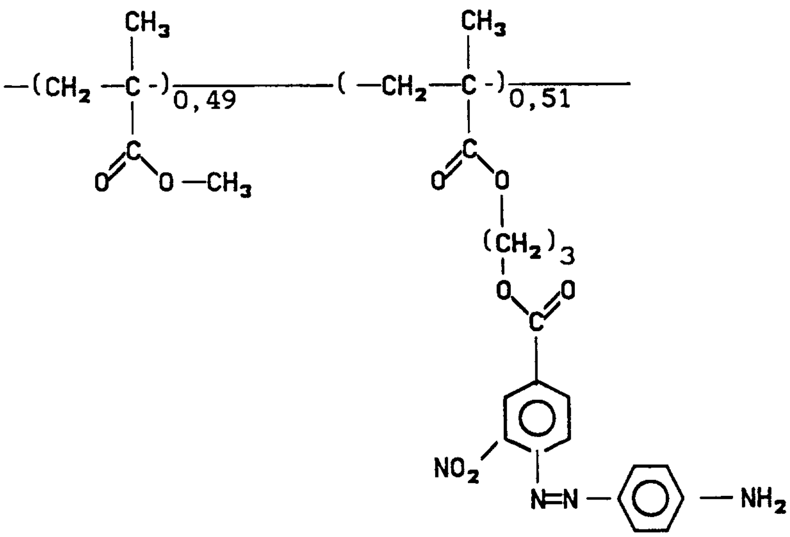

FIGURE V

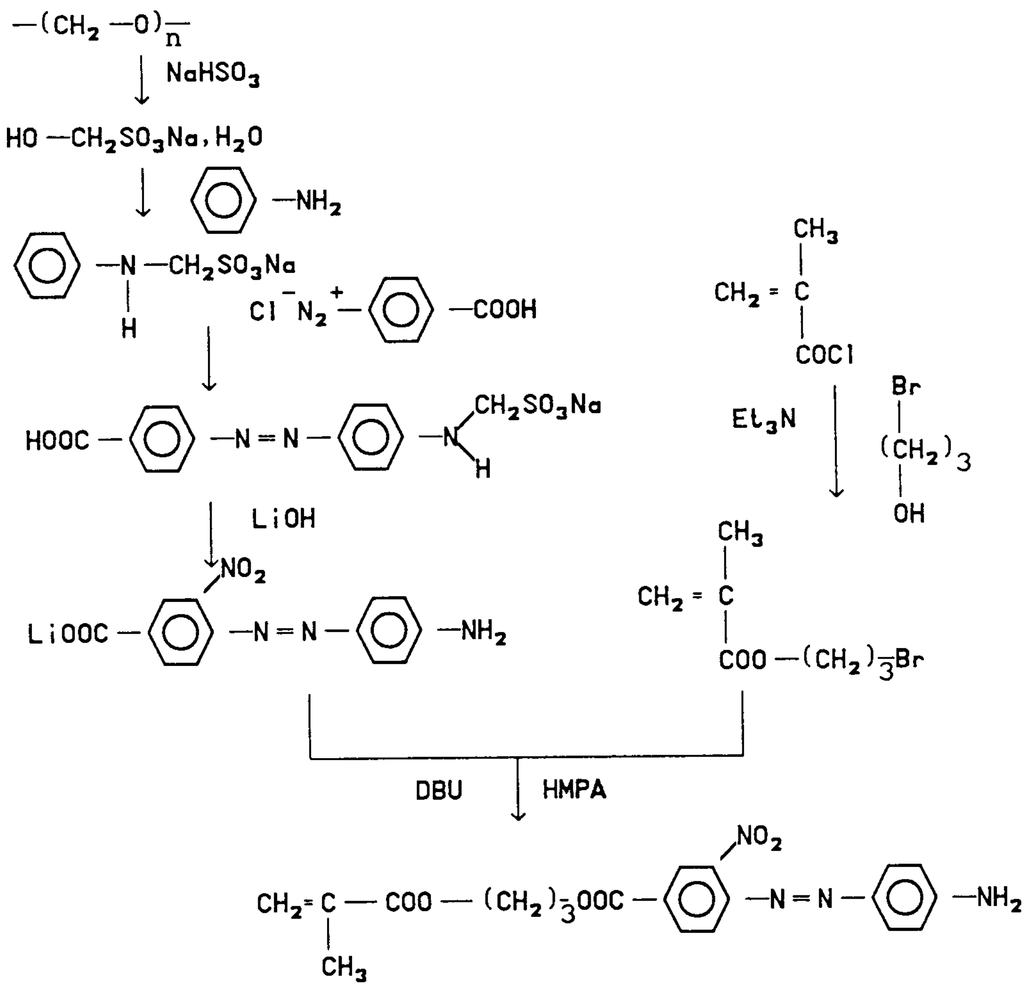


FIGURE VI

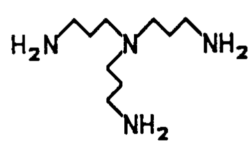

FIGURE VII

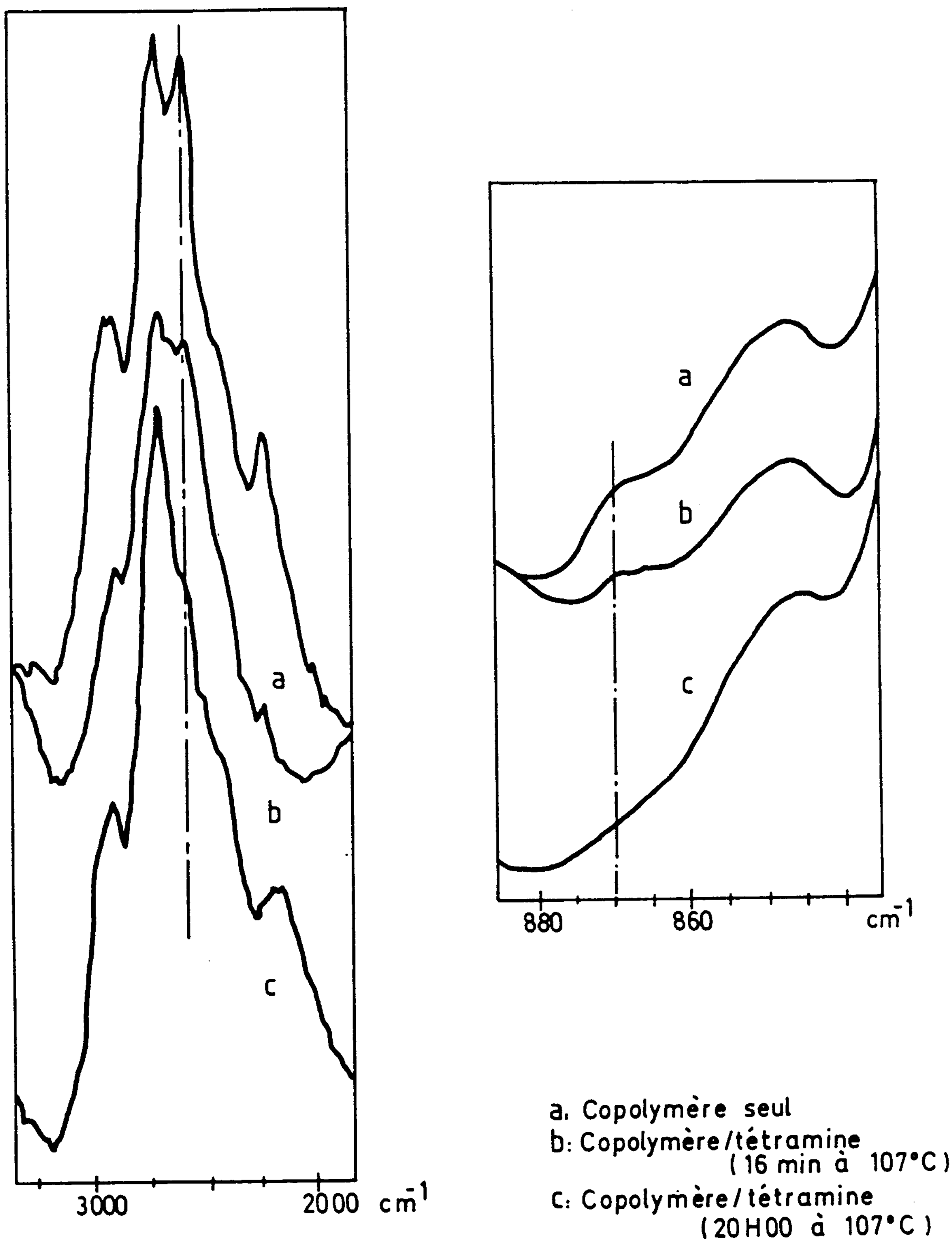
a
b
c
3000
2000 cm-1
a
b
c
880
860
cm-1
a, Copolymère seul
b: Copolymère/tétramine (16 min à 107°C)
c: Copolymère/tétramine (20H00 à 107°C)

FIGURE VIII